(19) Europäisches Patentamt / European Patent Office / Office européen des brevets

(11) **EP 2 501 733 B1**

(12) **EUROPEAN PATENT SPECIFICATION**

(45) Date of publication and mention of the grant of the patent:
**05.03.2014 Bulletin 2014/10**

(21) Application number: **10831680.3**

(22) Date of filing: **17.11.2010**

(51) Int Cl.:
***C08F 212/14*** *(2006.01)* ***C08F 12/24*** *(2006.01)*
***C08F 220/58*** *(2006.01)* ***G03G 9/087*** *(2006.01)*
***C08G 63/91*** *(2006.01)*

(86) International application number:
**PCT/JP2010/070949**

(87) International publication number:
**WO 2011/062289 (26.05.2011 Gazette 2011/21)**

(54) **RESIN FOR TONERS, AND TONER**

HARZ FÜR TONER UND TONER

RÉSINE POUR TONERS ET TONER

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.11.2009 JP 2009263489**

(43) Date of publication of application:
**26.09.2012 Bulletin 2012/39**

(73) Proprietor: **Canon Kabushiki Kaisha**
**Tokyo 146-8501 (JP)**

(72) Inventors:
- **KENMOKU, Takashi**
  **Tokyo 146-8501 (JP)**
- **ITABASHI, Hitoshi**
  **Tokyo 146-8501 (JP)**

(74) Representative: **TBK**
**Bavariaring 4-6**
**80336 München (DE)**

(56) References cited:
**WO-A1-2007/055416**
**JP-A- 2 167 565**
**JP-A- 4 016 858**
**JP-A- 2005 350 667**
**JP-A- 2006 037 093**
**JP-A- 2007 133 216**
**JP-A- 2007 133 218**
**JP-A- 2008 304 657**
**JP-A- 2009 114 399**
**JP-A- 2009 186 724**
**JP-A- 2009 186 725**
**US-A- 3 230 201**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 501 733 B1

Printed by Jouve, 75001 PARIS (FR)

## Description

### Technical Field

This invention relates to a resin for toners which is to be contained in toners used for forming toner images in image forming processes such as electrophotography and electrostatic printing or in an image forming process of a toner jet system. It also relates to a toner containing such a resin for toners.

### Background Art

Studies are energetically made on how toners can be improved in triboelectric charge characteristics. In particular, on account of consideration for environment, requirement for stabler chargeability and reduction of production cost, it is proposed in recent years that a resin having a charge control function is used as a raw material for toners (i.e., a charge control resin). In Japanese Patent No. 2694572, a toner is proposed which makes use of, as the charge control resin, a resin containing a salicylic acid structure. According to such a method, a toner is obtainable which has good charge characteristics while improving the sublimation property of salicylic acid.

However, as copying machines and printers have been made high-speed, there has been room for improvement. In particular, it has turned out that charging performance (in particular, charging rise performance at the initial stage of running) is insufficient where their process speed is made higher in a contact one-component developing system or the like. It has further tuned out that there is room for improvement in the stability of charging at the time of printing on a large number of sheets and the stability of charge quantity in a high-temperature and high-humidity environment. Against such phenomena, it is required for the toner to be quick in its rise of charging to a sufficient charge quantity in a short time and for the level of its charge to be stable from the initial stage over the printing on a large number of sheets. Thus, it is sought to provide a resin for toners that can achieve this.

### Summary of Invention

### Technical Problem

The present invention has been made taking account of the above problems. That is, an object of the present invention is to provide a resin for toners which is superior in the quickness in its rise of charging to a sufficient charge quantity in a short time, in the stability of charging that extends from the initial stage up to the printing on a large number of sheets, and in the stability of charging that comes in a high-temperature and high-humidity environment.

Another object of the present invention is to also provide a toner which is superior in the quickness in its rise of charging to a sufficient charge quantity in a short time, in the stability of charging that extends from the initial stage up to the printing on a large number of sheets, and in the stability of charging that comes in a high-temperature and high-humidity environment.

### Solution to Problem

The present inventors have, as a result of extensive studies, discovered that the above problems can be resolved by the resin for toners, and the toner, according to the present invention, and have accomplished the present invention.

That is, the present invention according to this application is firstly concerned with a resin for toners which comprises a polymer containing a unit A having a structure represented by the following formula (1) and a unit B having a structure represented by the following formula (2).

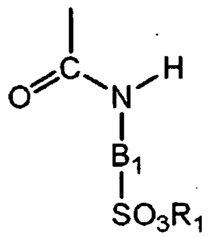

(1)

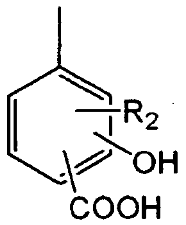

(2)

wherein, in the formula (1);

$R_1$ is a hydrogen atom or an alkyl group having 1 to 12 carbon atom(s); and
$B_1$ is an alkylene structure having 1 or 2 carbon atom(s) which may have a substituent, or an aromatic ring which may have a substituent, wherein the substituent which the alkylene structure may have is one selected from the group consisting of a hydroxyl group, an alkyl group having 1 to 12 carbon atom(s), an aryl group having 1 to 12 carbon atom(s) and an alkoxyl group having 1 to 12 carbon atom(s), and wherein the substituent which the aromatic ring may have is one selected from the group consisting of a hydroxyl group, an alkyl group having 1 to 12 carbon atom(s), and an alkoxyl group having 1 to 12 carbon atom(s) ; and in the formula (2);
the COOH and the OH are bonded at positions adjacent to each other; and
$R_2$ is a hydrogen atom or an alkyl group having 1 to 6 carbon atom(s).

The present invention according to this application is secondly concerned with a toner which comprises the above resin for toners.

## Advantageous Effects of Invention

According to the present invention, a resin for toners and a toner can be obtained which are superior in the quickness in their rise of charging to a sufficient charge quantity in a short time, in the stability of charging that extends from the initial stage up to the printing on a large number of sheets, and in the stability of charging that comes in a high-temperature and high-humidity environment.
Further features of the present invention will become apparent from the following description of exemplary embodiments with reference to the attached drawing.

## Brief Description of Drawings

[Fig. 1] Fig. 1 is a view showing the construction of an instrument used in measuring the triboelectric charge quantity of a developer containing a toner.

## Description of Embodiments

The present inventors have discovered that the effect of superior chargeability is obtained by using the polymer containing a unit A having a structure represented by the formula (1) and a unit B having a structure represented by the formula (2) (hereinafter often simply "the polymer"), and have accomplished the present invention.
In regard to the quickness in rise of charging to a sufficient charge quantity in a short time, the stability of charging that extends from the initial stage up to the printing on a large number of sheets and the stability of charging that comes in a high-temperature and high-humidity environment, the mechanism by which such superior effect is brought out is unclear, and the present inventors consider that the following (A) and (B) are concerned in it about the charging performance of the resin for toners which has the charge control function.

(A) The effect of generating electric charges and accumulating the electric charges; and
(B) the speed of dissipating electric charges that is considered to contribute toward making the electric charges uniform.

It has turned out that the ability to generate and accumulate electric charges and also make the electric charges uniform is brought out by providing the polymer in which the unit A represented by the formula (1), having sulfonic acid or a sulfonate as a substituent, and the unit B represented by the formula (2), having a salicylic acid derivative structure, are made present together. The mechanism thereof is unclear, and it is considered that the unit B represented by the formula (2) contributes toward dissipating any electric charges having been accumulated in excess in the unit A, to

appropriately make the electric charges uniform in the resin. Also, in the resin for toners of the present invention, the unit A and the unit B are present in the same polymer, and hence the unit A and the unit B are present therein standing close to each other on the level of molecules. Thus, the generation of electric charges and making the electric charges uniform take place instantaneously and this improves the rise of charging, as so considered.

There are no particular limitations on the backbone chain structure of the polymer as long as it is a structure into which the unit A represented by the formula (1), having sulfonic acid or a sulfonate as a substituent, and the unit B represented by the formula (2), having a salicylic acid derivative structure, can be introduced. For example, it may include vinyl polymers, polyester polymers, polyamide polymers, polyurethane polymers and polyether polymers. Taking account of readiness for production and cost advantages in producing the resin for toners of the present invention, it may preferably be a polyester polymer or a vinyl polymer.

In the unit A represented by the formula (1), $R_1$ may preferably be a hydrogen atom, a methyl group or an ethyl group, and much preferably a hydrogen atom or a methyl group. $B_1$ may preferably be phenylene, naphthylene or dimethylethylene, and much preferably phenylene or dimethylethylene. The phenylene and naphthylene may have a methyl group or methoxy group as a substituent.

In the unit B represented by the formula (2), $R_6$ may preferably be a hydrogen atom, a methyl group, an ethyl group, a propyl group or a butyl group, and much preferably a hydrogen atom or t-butyl group.

In the present invention, the unit A of the resin for toners may preferably be a unit represented by the following formula (3). The unit B of the resin for toners may also preferably be a unit represented by the following formula (4).

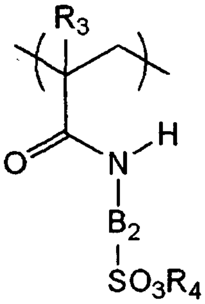

(3)

wherein, in the formula (3);

$R_3$ is a hydrogen atom or a methyl group;
$R_4$ is a hydrogen atom or an alkyl group having 1 to 12 carbon atom(s); and
$B_2$ is an alkylene structure having 1 or 2 carbon atom(s) which may have a substituent, or an aromatic ring which may have a substituent, wherein the substituent which the alkylene structure may have is one selected from the group consisting of a hydroxyl group, an alkyl group having 1 to 12 carbon atom(s), an aryl group having 1 to 12 carbon atom(s) and an alkoxyl group having 1 to 12 carbon atom(s), and wherein the substituent which the aromatic ring may have is one selected from the group consisting of a hydroxyl group, an alkyl group having 1 to 12 carbon atom(s) and an alkoxyl group having 1 to 12 carbon atom(s); and

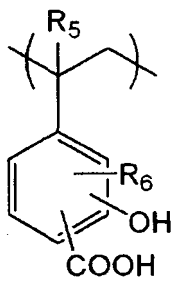

(4)

in the formula (4);
the COOH and the OH are bonded at positions adjacent to each other;
$R_5$ is a hydrogen atom or a methyl group; and
$R_6$ is a hydrogen atom or an alkyl group having 1 to 6 carbon atom(s).

In the case of the units represented by the formulas (3) and (4), the effect of the present invention is much preferably brought out in toner particles composed chiefly of a vinyl resin.

This is because, in virtue of the fact that the backbone chain of the unit A represented by the formula (3) or the unit B represented by the formula (4) is a vinyl polymer, these units may readily be made compatible in the toner particles composed chiefly of a vinyl resin. Making these units compatible enables the unit A and unit B to be present in the state that they keep an equal distance between them to a certain extent, and hence this makes more remarkable the effect of making use of the resin for toners of the present invention, as so considered.

For the like reason, other unit(s) constituting the resin for toners of the present invention may preferably be a unit(s) derived from a vinyl monomer(s).

Making up a copolymer of a vinyl type also enables easy control of the glass transition point (Tg) of the resin for toners, and hence this can be a preferred embodiment because the effect of the present invention can be brought out while keeping the fixing performance of the toner.

In the resin for toners of the present invention, the unit A represented by the formula (1) may preferably be in a content of from 0.10% by mass to 30.00% by mass, and the unit B represented by the formula (2) in a content of from 1.00% by mass to 40.00% by mass.

As long as the unit A represented by the formula (1) is in a content within the above range, the toner can have more sufficient charge quantity as toner particles while keeping their charge-up from coming about. As long as the unit B represented by the formula (2) is in a content within the above range, the uniform charging can be made to take place more quickly, and also the toner can be made less influenced by any moisture absorption the unit B represented by the formula (2) has.

Meanwhile, the resin for toners of the present invention may also be made up as a polymer having a polyester structure. In this case, it has a polyester structure which is formed by polycondensation of at least a polyhydric alcohol component and a polycarboxylic acid component, and also contains the unit A represented by the formula (1), having sulfonic acid or a sulfonate as a substituent, and the unit B represented by the formula (2), having a salicylic acid derivative structure. A hybrid resin having been modified with a vinyl monomer may also be used as a resin having such a polyester structure.

Where the hybrid resin is used, any known method may be used in controlling the ratio of vinyl modification in the hybrid resin. Stated specifically, any desired modification ratio may be controlled by changing the ratio of feeding the polyester component and vinyl monomer component to be used. In the case when the hybrid resin is used, the unit A represented by the formula (1), having sulfonic acid or a sulfonate as a substituent, and the unit B represented by the formula (2), having a salicylic acid derivative structure, may be present in either of a vinyl resin unit and a polyester resin unit. These may also be present on a side chain(s) or at a terminal(s).

The polyhydric alcohol component constituting the resin containing the above polyester structure may include the following. Stated specifically, as a dihydric alcohol component for example, it may include bisphenol-A alkylene oxide addition products such as polyoxypropylene(2.2)-2,2-bis(4-hydroxyphenyl)propane, polyoxypropylene(3.3)-2,2-bis(4-hydroxyphenyl)propane, polyoxyethylene(2.0)-2,2-bis(4-hydroxyphenyl)propane, polyoxypropylene(2.0)-polyoxyethylene(2.0)-2,2-bis(4-hydroxyphenyl)propane and polyoxypropylene(6)-2,2-bis(4-hydroxyphenyl)propane; and ethylene glycol, diethylene glycol, triethylene glycol, 1,2-propylene glycol, 1,3-propylene glycol, 1,4-butanediol, neopentyl glycol, 1,4-butenediol, 1,5-pentanediol, 1,6-hexanediol, 1,4-cyclohexanedimethanol, dipropylene glycol, polyethylene glycol, polypropylene glycol, polytetramethylene glycol, bisphenol A and hydrogenated bisphenol A.

As a trihydric or higher alcohol component, it may include, e.g., sorbitol, 1,2,3,6-hexanetetrol, 1,4-sorbitan, pentaerythritol, dipentaerythritol, tripentaerythritol, 1,2,4-butanetriol, 1,2,5-pentanetriol, glycerol, 2-methylpropanetriol, 2-methyl-1,2,4-butanetriol, trimethylolethane, trimethylolpropane and 1,3,5-trihydroxymethylbenzene.

As the polycarboxylic acid component, it may include, e.g., aromatic dicarboxylic acids such as phthalic acid, isophthalic acid and terephthalic acid, or anhydrides thereof; alkyldicarboxylic acids such as succinic acid, adipic acid, sebacic acid and azelaic acid, or anhydrides thereof; succinic acids substituted with an alkyl group having 6 to 12 carbon atoms, or anhydrides thereof; and unsaturated dicarboxylic acids such as fumaric acid, maleic acid and citraconic acid, or anhydrides thereof.

Of these, it is particularly preferable to use as a diol component a bisphenol derivative and as an acid component a carboxylic acid component composed of a dior higher-carboxylic acid or an anhydride thereof or a lower alkyl ester thereof, (such as e.g., fumaric acid, maleic acid, maleic anhydride, phthalic acid, terephthalic acid, trimellitic acid and pyromellitic acid). The condensation polymerization of the diol component and the acid component produces a polyester resin which may preferably be used.

As methods for producing the resin for toners of the present invention, there are no particular limitations thereon. It may be produced by any known method. In the case of the vinyl resin, the method is exemplified by a method in which, e.g., a polymerizable monomer [(the following formula (5)] containing the unit A having the structure represented by the formula (1) and a polymerizable monomer [(the following formula (6)] containing the unit B having the structure represented by the formula (2) are polymerized in the presence of a polymerization initiator.

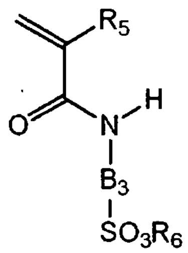

(5)

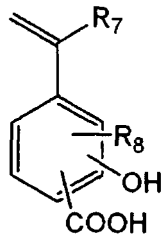

(6)

wherein, in the formula (5);$R_5$ is a hydrogen atom or a methyl group;
$R_6$ is a hydrogen atom or an alkyl group having 1 to 12 carbon atom(s); and
$B_3$ is an alkylene structure having 1 or 2 carbon atom(s) which may have a substituent, or an aromatic ring which may have a substituent, wherein the substituent which the alkylene structure may have is one selected from the group consisting of a hydroxyl group, an alkyl group having 1 to 12 carbon atom(s), an aryl group having 1 to 12 carbon atom(s) and an alkoxyl group having 1 to 12 carbon atom(s), and wherein the substituent which the aromatic ring may have is one selected from the group consisting of a hydroxyl group, an alkyl group having 1 to 12 carbon atom(s) and an alkoxyl group having 1 to 12 carbon atom(s); and in the formula (6);
the COOH and the OH are bonded at positions adjacent to each other;
$R_7$ is a hydrogen atom or a methyl group; and
$R_8$ is a hydrogen atom or an alkyl group having 1 to 6 carbon atom(s).

The polymerizable monomer [(the formula (5)] usable as the unit A may include, as specific examples, the following. It is exemplified by 2-acrylamido-2-methylpropanesulfonic acid, 2-acrylamidobenzenesulfonic acid, 2-methacrylamidobenzenesulfonic acid, 3-acrylamidobenzenesulfonic acid, 3-methacrylamidobenzenesulfonic acid, 4-acrylamidobenzenesulfonic acid, 4-methacrylamidobenzenesulfonic acid, 2-acrylamido-5-methylbenzenesulfonic acid, 2-methacrylamido-5-methylbenzenesulfonic acid, 2-acrylamido-5-methoxybenzenesulfonic acid, 2-methacrylamido-5-methoxybenzenesulfonic acid, and a 1 to 12 carbon atom(s)-having alkyl ester of any of these. Among them, the sulfonic acid structure, methyl ester or ethyl ester may be preferable and the sulfonic acid structure or methyl ester may be much preferable.

The polymerizable monomer [(the formula (6)] usable as the unit B may include, as specific examples, the following. It is exemplified by 3-vinylsalicylic acid, 4-vinylsalicylic acid, 5-vinylsalicylic acid, 6-vinylsalicylic acid, 3-vinyl-5-isopropylsalicylic acid, 3-vinyl-5-t-butylsalicylic acid, 4-vinyl-6-t-butylsalicylic acid, and 3-isopropenyl-5-t-butylsalicylic acid.

As the vinyl monomer for forming the other unit usable in the resin for toners of the present invention, there are no particular limitations thereon. Stated specifically, it may include styrene and derivatives thereof, such as o-methylstyrene, m-methylstyrene, p-methylstyrene and $\alpha$-methylstyrene; ethylene unsaturated monoolefins such as ethylene, propylene, butylene and isobutylene; vinyl halides such as vinyl chloride, vinylidene chloride, vinyl bromide and vinyl fluoride; vinyl esters such as vinyl acetate, vinyl propionate and vinyl benzoate; acrylates such as n-butyl acrylate and n-hexyl acrylate; methacrylates obtained by converting acryl moieties of the above acrylates into methacrylates; methacrylic amino esters such as dimethylaminoethyl methacrylate and diethylaminoethyl methacrylate; vinyl ethers such as methyl vinyl ether and ethyl vinyl ether; vinyl ketones such as methyl vinyl ketone; N-vinyl compounds such as N-vinylpyrrole; vinylnaphthalenes; and acrylic acid or methacrylic acid derivatives such as acrylonitrile, methacrylonitrile and acrylamide, as well as acrylic acid and methacrylic acid.

As polymerization initiators usable in copolymerizing the polymerizable monomer components described above, various ones may be used, such as peroxide type polymerization initiators and azo type polymerization initiators. The peroxide type polymerization initiators which may be used may include, as organic types, peroxy esters, peroxydicarbonates, dialkyl peroxides, peroxyketals, ketone peroxides, hydroperoxides and diacyl peroxides. As inorganic types, the initiators may include persulfates and hydrogen peroxide. Stated specifically, such initiators may include peroxy

esters such as t-butyl peroxyacetate, t-butyl peroxypivarate, t-butyl peroxyisobutyrate, t-hexyl peroxyacetate, t-hexyl peroxypivarate, t-hexyl peroxyisobutyrate, t-butyl peroxyisopropyl monocarbonate, and t-butyl peroxy-2-ethylhexyl monocarbonate; diacyl peroxides such as benzoyl peroxide; peroxydicarbonates such as diisopropyl peroxydicarbonate; peroxyketals such as 1,1-di-t-hexylperoxycyclohexane; dialkyl peroxides such as di-t-butyl peroxide; and others such as t-butyl peroxyallylmonocarbonate. Also, the azo type polymerization initiators which may be used may be exemplified by 2,2'-azobis-(2,4-dimethylvaleronitrile), 2,2'-azobisisobutyronitrile, 1,1'-azobis-(cyclohexane-1-carbonitrile), 2,2'-azobis-4-methoxy-2,4-dimethylvaleronitrile, azobisisobutyronitrile, and dimethyl-2,2'-azobis(2-methylrpopionate).

Two or more types of any of these polymerization initiators may optionally simultaneously be used. The polymerization initiator used here may preferably be in an amount, of from 0.1 part by mass or more to 20.0 parts by mass or less, based on 100 parts by mass of the polymerizable monomers. As the polymerization process therefor, any of processes such as solution polymerization, suspension polymerization, emulsion polymerization, dispersion polymerization, precipitation polymerization and bulk polymerization may be used without any particular limitations.

Meanwhile, in the case when the resin for toners of the present invention is the polyester resin, various known production processes may be used, which may include, e.g.:

(A) a process in which a reaction residual group of a carboxyl group or hydroxyl group contained in the polyester structure is utilized to convert it into the unit A having as a substituent the structure represented by the formula (1) and the unit B having the structure represented by the formula (2), by organic reaction;

(B) a process in which a polyhydric alcohol or polycarboxylic acid which has the unit A having as a substituent the structure represented by the formula (1) and the unit B having the structure represented by the formula (2) is used to produce the polyester; and

(C) a process in which a functional group which facilitates introduction of the unit A having as a substituent the structure represented by the formula (1) and the unit B having the structure represented by the formula (2) is beforehand kept introduced into a polyhydric alcohol or polycarboxylic acid.

In the case when the resin for toners of the present invention is the hybrid resin, the process may include:

(D) a process in which a polyester resin containing the unit A having as a substituent the structure represented by the formula (1) and the unit B having the structure represented by the formula (2) is hybridized by using a vinyl monomer;

(E) a process in which a monomer having a carboxyl group such as acrylic acid or methacrylic acid as a vinyl monomer is polymerized and thereafter the carboxyl group is converted into the structure represented by the formula (1) or the structure represented by the formula (2), by organic reaction; and

(F) a process in which a vinyl monomer having the structure represented by the formula (1) and the structure represented by the formula (2) is used to hybridized a polyester resin.

As a method by which the polyester resin is hybridized by using a vinyl monomer, any known method may be used, which is effective as a method for the process (D). Stated specifically, it may include a method in which the polyester is vinyl-modified in the presence of a peroxide type initiator, and a method in which a polyester having an unsaturated group is graft-modified to produce the hybrid resin.

Instead, as a specific method for the process (E), it may include a method in which, where the structure represented by the formula (1) is introduced by organic reaction, the carboxyl group present in the resin is made into an amide by using a sulfonic acid such as aminomethanesulfonic acid or aminoethanesulfonic acid (taurine) and a compound having an amino group, and further the sulfonic acid is esterified with a known esterifying agent. It may also include a method in which, where the structure represented by the formula (2) is introduced, the carboxyl group present in the resin is made into an amide by using a compound formed by introducing an amino group into a salicylic structure such as 4-aminosalicylic acid or 5-aminosalicylic acid.

As another specific method for the process (F), the polymerizable monomer represented by the formula (5) as shown previously may be used as the vinyl monomer that is usable and has the unit A represented by the formula (1), having sulfonic acid or a sulfonate as a substituent. The polymerizable monomer represented by the formula (6) as shown previously may also be used as the vinyl monomer that is usable and has the unit B represented by the formula (2), having a salicylic acid derivative structure.

In the present invention, as a method for controlling the weight-average molecular weight of the polymer, any known method may be used. Stated specifically, in the case of the polyester resin, it may be controlled as desired, by controlling the ratio of feeding the acid component and alcohol component and/or the time for polymerization. In the case of the hybrid resin, the molecular weight of a vinyl-modified unit may also be controlled in addition to the controlling of molecular weight of the polyester component. Stated specifically, the molecular weight may be controlled as desired, by controlling the amount of a radical initiator and/or the temperature for polymerization in the step of reaction for the

vinyl modification. As a vinyl monomer usable in hybridizing the polyester resin in the present invention, the vinyl monomer described above may be used.

The resin for toners may preferably have a molecular weight of from 1,000 or more to 1,000,000 or less as weight-average molecular weight measured by gel permeation chromatography (GPC). As a much preferable range, it may have a weight-average molecular weight of from 2,000 or more to 200,000 or less. Inasmuch as the resin for toners in the present invention has molecular weight within the above range, members such as a sleeve and a carrier are well kept from being contaminated.

From the viewpoint of charge characteristics and charging performance or chargeability, the resin for toners may preferably have a narrow molecular weight distribution. Its ratio of weight average molecular weight Mw to number weight average molecular weight Mn (Mw/Mn) calculated from those measured by gel permeation chromatography may preferably be from 1.0 or more to 6.0 or less, and much preferably from 1.0 or more to 4.0 or less.

The toner for which the resin for toners of the present invention is usable is described below.

The toner of the present invention contains the resin for toners that is the polymer containing the unit A having the structure represented by the formula (1) and the unit B having the structure represented by the formula (2), and this brings out the effect of the present invention.

The resin for toners may preferably be added in addition to a resin used as a binder resin. The resin for toners may preferably be in a content of, but not particularly limited to, from 0.1 part by mass or more to 20.0 parts by mass or less, and much preferably from 0.3 part by mass or more to 10.0 parts by mass or less, based on 100 parts by mass of the binder resin. As long as its content is within the above range, it is well dispersible in toner particles, and its addition can well be effective.

There are no particular limitations on the binder resin used in the toner of the present invention. It may include, e.g., styrene resins, acrylic resins, styrene-acrylic resins, polyethylene resins, polyethylene-vinyl acetate resins, vinyl acetate resins, polybutadiene resins, phenol resins, polyurethane resins, polybutyral resins and polyester resins. Of these, styrene resins, acrylic resins, styrene-acrylic resins and polyester resins are preferred in view of toner characteristics.

There are no particular limitations on the molecular weight distribution of the binder resin in the toner of the present invention, and it may preferably have peak molecular weight in the range of from 3,000 or more to 80,000 or less as calculated from those measured by GPC of the THF-soluble resin component. As long as the binder resin has the peak molecular weight within the above range, it can better achieve both charging performance and low-temperature fixing performance of the toner.

The toner of the present invention may preferably contain a wax. By incorporating a wax in toner particles, a toner having a superior fixing performance can be obtained, which has superior low-temperature fixing performance and anti-offset performance and also can obtain fixed images having a superior surface smoothness.

In the case when the wax is incorporated in toner particles, the wax melted at the time of fixing acts as a release agent between a transfer material and a fixing member in virtue of its surface tension, to not only improve anti-offset performance, but also accelerate the melting of the toner at the time of fixing to improve even the low-temperature fixing performance. It is preferable to use such a wax that, in a DSC curve of the toner, the peak temperature of a maximum endothermic peak seen at the time of heating is from 45°C or more to 130°C or less, much preferably from 50°C or more to 110°C or less, and further preferably from 50°C or more to 90°C or less.

The wax used in the toner of the present invention may preferably be in content in the range of from 0.5 part by mass or more to 30.0 parts by mass or less, based on 100 parts by mass of the binder resin.

As the wax usable in the toner of the present invention, it may be selected from those having the endothermic peak within the range as shown above. There are no particular limitations thereon. Stated specifically, it may include petroleum waxes such as paraffin wax, microcrystalline wax and petrolatum, and derivatives thereof; montan wax and derivatives thereof; hydrocarbon waxes obtained by Fischer-Tropsch synthesis, and derivatives thereof; polyolefin waxes typified by polyethylene wax, and derivatives thereof; and naturally occurring waxes such as carnauba wax and candelilla wax, and derivatives thereof. The derivatives include oxides, block copolymers with vinyl monomers, and graft modified products. It may further include higher aliphatic alcohols, fatty acids such as stearic acid and palmitic acid, or compounds thereof, acid amide waxes, ester waxes, ketones, hardened caster oil and derivatives thereof, vegetable waxes, and animal waxes.

To make up a toner having a superior fixing performance as stated above, it is preferable to also control the glass transition point of the toner. The toner may preferably have a glass transition point determined from a DSC curve of the toner, in the range of from 45°C or more to 70°C or less, and much preferably in the range of from 50°C or more to 70°C or less. As long as it has the glass transition point within the above range, the toner can well achieve both low-temperature fixing performance and storage stability.

Usually, a colorant is added to the toner. However, any colorant is not added where it is used as a transparent toner.

As black colorants, usable are carbon black, magnetic materials, and colorants toned in black by using yellow,

magenta and cyan colorants shown below.

As yellow colorants, compounds typified by condensation azo compounds, isoindolinone compounds, anthraquinone compounds, azo metal complex methine compounds and allylamide compounds are used as pigment types. Stated specifically, C.I. Pigment Yellows 74, 93, 94, 95, 109, 111, 128, 138, 151, 155, 174, 180 and 185 are preferably used. As dye types, the yellow colorant may include, e.g., C.I. Solvent Yellow 93, 162 and 163.

As magenta colorants, condensation azo compounds, diketopyrrolopyrrole compounds, anthraquinone compounds, quinacridone compounds, basic dye lake compounds, naphthol compounds, benzimidazolone compounds, thioindigo compounds and perylene compounds are used. Stated specifically, C.I. Pigment Reds 2, 3, 5, 6, 7, 23, 48:2, 48:3, 48:4, 57:1, 81:1, 122, 146, 166, 169, 177, 184, 185, 202, 206, 220, 221 and 254, and C.I. Pigment Violet 19 are particularly preferred.

As cyan colorants, copper phthalocyanine compounds and derivatives thereof, anthraquinone compounds and basic dye lake compounds may be used. Stated specifically, C.I. Pigment Blues 1, 7, 15, 15:1, 15:2, 15:3, 15:4, 60, 62 and 66 may particularly preferably be used.

Any of these colorants may be used alone, in the form of a mixture, or further in the state of a solid solution. In the present invention, the colorants are selected taking account of hue angle, chroma, brightness, weatherability, transparency on OHP sheets and dispersibility in toner particles. The colorant may be, in its use, so added as to be in an amount of from 1.0 part by mass or more to 20.0 parts by mass or less, based on 100 parts by mass of the binder resin.

The toner of the present invention may also further be incorporated with a magnetic material so that it can be used as a magnetic toner. In this case, the magnetic material may also serve as a colorant. In the present invention, the magnetic material may include iron oxides such as magnetite, hematite and ferrite; metals such as iron, cobalt and nickel, or alloys of any of these metals with a metal such as aluminum, cobalt, copper, lead, magnesium, tin, zinc, antimony, beryllium, bismuth, cadmium, calcium, manganese, selenium, titanium, tungsten or vanadium, and mixtures of any of these.

The magnetic material used in the present invention may preferably be a surface-modified magnetic material. Where it is used in a polymerization toner produced by a production process such as polymer solution suspension or suspension polymerization, it may preferably be those having been subjected to hydrophobic treatment with a surface modifier which is a substance having no polymerization inhibitory action. Such a surface modifier may include, e.g., silane coupling agents and titanium coupling agents.

These magnetic materials may preferably be those having an average particle diameter of 2 $\mu$m or less, and preferably from 0.1 $\mu$m or more to 0.5 $\mu$m or less. As quantity in which the magnetic material is incorporated in the toner particles, it may be in an amount of from 20 parts by mass or more to 200 parts by mass or less, and preferably from 40 parts by mass or more to 150 parts by mass or less, based on 100 parts by mass of the binder resin.

The magnetic material may preferably be a magnetic material having a coercive force (Hc) of from 1.59 kA/m or more to 23.9 kA/m or less (20 oersteds or more to 300 oersteds or less), a saturation magnetization ($\sigma$s) of from 50 $Am^2$/kg or more to 200 $Am^2$/kg or less and a residual magnetization ($\sigma$r) of from 2 $Am^2$/kg or more to 20 $Am^2$/kg or less as magnetic properties under application of 796 kA/m (10 kilooersteds).

In the toner of the present invention, in order to develop finer latent image dots faithfully to achieve a high image quality, the toner may preferably have a weight average particle diameter (D4) of from 3.0 $\mu$m or more to 9.0 $\mu$m or less, and much preferably from 4.0 $\mu$m or more to 6.5 $\mu$m or less.

The toner of the present invention may also be incorporated with a charge control agent in order to support triboelectric charge characteristics of the toner. Stated specifically as charge control agents which can be incorporated, preferred are, as negative charge control agents, metal compounds of salicylic acid, alkylsalicylic acids, dialkylsalicylic acids, naphthoic acid, dicarboxylic acids and so forth; polymer type compounds having sulfonic acid or carboxylic acid in the side chain; and boron compounds, urea compounds, silicon compounds, carixarene and so forth. As positive charge control agents, they may include quaternary ammonium salts, polymer type compounds having such a quaternary ammonium salt in the side chain, guanidine compounds, and imidazole compounds.

As methods for producing the toner of the present invention, known production methods may be used without any particularly limitations. Stated specifically, they may include:

(A) a method in which toner particles are directly produced by suspension polymerization disclosed in Japanese Patent Publication No.S36-10231 and Japanese Patent Applications Laid-open No.S59-53856 and No.S59-61842;
(B) a method in which toner particles are produced by interfacial polymerization like that in the production of microcapsules;
(C) a method of making into toner particles by coacervation;
(D) a method in which toner particles are obtained by association polymerization where at least one kind of fine particles is agglomerated to obtain toner particles with desired particle diameter, as disclosed in Japanese Patent Applications Laid-open No.S62-106473 and No.S63-186253;
(E) a method in which toner particles are produced by dispersion polymerization which is characterized by monodispersion;

(F) a method of obtaining toner particles by a polymer dissolution (melting) suspension process in which necessary resins are dissolved in a water-insoluble organic solvent and thereafter made into toner particles in water;

(G) a method of obtaining toner particles by emulsion dispersion;

(H) a method of obtaining toner particles by a pulverization process in which toner components are kneaded and uniformly dispersed by using a pressure kneader, an extruder, a media dispersion machine or the like, followed by cooling, and the kneaded product cooled is made to collide against a target in jet streams so as to be finely pulverized to have the desired toner particle diameter, further followed by the step of classification to make particle size distribution sharp to produce the toner particles; and

(I) a method in which the toner particles obtained by the pulverization process are put to spherical treatment by heating or the like in a solvent to obtain toner particles.

In particular, what brings out the effect of the present invention more remarkably is the case in which the toner particles are produced by suspension polymerization. The reason therefor is that the resin for toners described above can effectively be localized in the vicinity of toner particle surfaces in the step of effecting granulation in an aqueous medium (a granulation step).

In the method of producing toner particles by the suspension polymerization, first, the colorant is uniformly dissolved, mixed or dispersed by means of a stirrer or the like in polymerizable monomers constituting the binder resin. Especially when the colorant is a pigment, it is preferable to make treatment by means of a dispersion machine to make up a pigment-dispersed paste. This paste is uniformly dissolved, mixed or dispersed by means of a stirrer or the like together with the polymerizable monomer, the resin for toners and the polymerization initiator, as well as the wax and other additives optionally used, to prepare a polymerizable monomer composition. The polymerizable monomer composition thus obtained is added to a dispersion medium (preferably an aqueous medium) containing a dispersion stabilizer, and the former is finely dispersed until it comes into particles having toner particle diameters (a granulation step), by using as a stirrer a high-speed stirrer or using a high-speed dispersion machine such as an ultrasonic dispersion machine. Then, the polymerizable monomer composition having been finely dispersed in the granulation step is allowed to undergo polymerization reaction by light or heat, thus the toner particles can be obtained.

As a method for dispersing such a pigment in an organic medium, any known method may be used. For example, the polymerizable monomers and optionally a resin and a pigment dispersant are dissolved in the organic medium (a solvent), and then pigment powder is slowly added thereto with stirring, to make it well compatible with the solvent. Further, a mechanical shear force is applied by using a dispersion machine such as a ball mill, a paint shaker, a dissolver, an attritor, a sand mill or a high-speed mill, whereby the pigment can stably finely be dispersed, i.e., can be dispersed in the form of uniform fine particles.

As polymerizable monomers preferably usable in the suspension polymerization, the vinyl monomers usable in the resin for toners may be used.

The dispersion medium usable in the above production process may be selected taking account of the solubility of the binder resin, organic medium and polymerizable monomers and that of the resin for toners in the dispersion medium, and an aqueous dispersion medium is preferred. As the aqueous dispersion medium, it may include water; alcohols such as methyl alcohol, ethyl alcohol, modified ethyl alcohol, isopropyl alcohol, n-butyl alcohol, isobutyl alcohol, tert-butyl alcohol, and sec-butyl alcohol; and ether alcohols such as methyl cellosolve, cellosolve, isopropyl cellosolve, butyl cellosolve, diethylene glycol monobutyl ether; and besides, as water-soluble solvents, may be selected from ketones such as acetone, methyl ethyl ketone and methyl isobutyl ketone; esters such as ethyl acetate; ethers such as ethyl ether and ethylene glycol; acetals such as methylal and diethylaceatal; acids such as formic acid, acetic acid and propionic acid. It may particularly preferably be water or an alcohol. Any of these solvents may also be used in the form of a mixture of two or more types. In the dispersion medium, the liquid mixture or the polymerizable monomer composition may be in a concentration of from 1% by mass or more to 80% by mass or less, and much preferably from 10% by mass or more to 65% by mass or less, based on the mass of the dispersion medium.

As a dispersion stabilizer usable when the aqueous dispersion medium is used, any known agent may be used. Stated specifically, it may include, as inorganic dispersants, calcium phosphate, magnesium phosphate, aluminum phosphate, zinc phosphate, calcium carbonate, magnesium carbonate, calcium hydroxide, magnesium hydroxide, aluminum hydroxide, calcium metasilicate, calcium sulfate, barium sulfate, bentonite, silica, and alumina. As organic compounds, it may include polyvinyl alcohol, gelatin, methyl cellulose, methyl hydroxypropyl cellulose, ethyl cellulose, carboxymethyl cellulose sodium salt, polyacrylic acid and salts thereof, and starch, any of which may be used in the state of being dispersed in an aqueous phase. The dispersion stabilizer may preferably be in a concentration of from 0.2 part by mass or more to 20.0 parts by mass or less, based on 100 parts by mass of the liquid mixture or the polymerizable monomer composition.

As a polymerization initiator used in producing the toner of the present invention by the suspension polymerization, the polymerization initiator usable in the resin for toners may likewise be used.

In the case when the toner is produced by suspension polymerization, any known cross-linking agent may also be added, which may preferably be added in an amount of from 0.001 part by mass or more to 15.000 parts by mass or less, based on 100 parts by mass of the polymerizable monomers.

The toner of the present invention may also be a toner having toner particles which are formed of i) base particles C containing at least the binder resin and the colorant and ii) fine resin particles at least having adhered to the base particle surfaces. In this case, fine resin particles s containing the resin for toners of the present invention may be used. Such fine resin particles s may be in a content of from 0.1% by mass to 20.0% by mass based on the mass of the base particles C, and may preferably be in a content of from 2.0% by mass to 10.0% by mass, and much preferably from 3.0% by mass to 7.0% by mass. Inasmuch as the above range is satisfied, the fine resin particles s may easily be made to adhere to the surfaces of the base particles C in the state of being uniformly dispersed and moreover firmly.

The fine resin particles s may have a number average particle diameter of from 10 nm to 200 nm, preferably from 20 nm to 150 nm, and much preferably from 50 nm to 100 nm.

In order to obtain the fine resin particles s which contain the polymer containing the unit A having the structure represented by the formula (1) and the unit B having the structure represented by the formula (2), any known method may be used.

For example, it may include;

(A) a method in which the resin for toners is synthesized and thereafter emulsified in an aqueous medium to obtain fine particles; and

(B) fine particles are obtained by emulsion polymerization.

In the present invention, in order to obtain the toner particles formed of the base particles C and the fine resin particles s having adhered to the base particle surfaces, a known method may be given. For example, it may include;

(A) a method in which the base particles C and the fine resin particles s are mixed and a shear force is applied thereto; and

(B) a method in which the fine resin particles s are added to an aqueous medium containing the base particles C, and optionally temperature, pH and time are controlled and conditions under which an agent for agglomerating an electrolyte are changed to form the toner particles.

In the present invention, constitution shown below is important in order to make the fine resin particles s adhere to the surfaces of the base particles C uniformly and moreover firmly.

The number average particle diameter of the fine resin particles s can satisfy the above range by controlling the conditions for granulation in producing the fine particles and the type and amount of a surface active agent. Stated specifically, the granulation conditions may include the solid-liquid ratio in the aqueous medium, the pH of the aqueous medium and the rate of stirring. Also, the surface active agent usable in the present invention may include known ionic surface active agents and nonionic surface active agents.

As stated above, there are no particular limitations on the method of preparing the fine resin particles s, which may include an emulsion polymerization process and a method in which the resin is dissolved or melted in a solvent so as to be liquefied, and this is brought to suspension or phase transition emulsification in an aqueous medium to prepare the fine resin particles s. Here, any known surface active agent or dispersant may be used, or the resin that forms the fine resin particles s may be made to have self-emulsifiability.

As the binder resin that constitutes the base particles C, any known resin may be used, which may include the following: Styrene resins, acrylic resins (inclusive of methacrylic resins), styrene-acrylic resins (inclusive of methacrylic resins), polyethylene resins, polyethylene-vinyl acetate resins, vinyl acetate resins, polybutadiene resins, phenol resins, polyurethane resins, polybutyral resins and polyester resins, and also hybrid resins obtained by combination of any of these resins. These resins may each optionally have a cross-linked structure without any problem.

As a colorant, a wax and a charge control agent which are usable in the base particles C, those described previously may each be used.

As a method for producing the base particles C in the present invention, any known method may be used.

For example, it may include:

(A) a method in which toner particles are produced by a pulverization process in which the toner particles are obtained by melt-kneading the binder resin, the colorant and the wax, followed by the step of fine grinding and optionally classification; and

(B) a method in which toner particles are produced in an aqueous medium by suspension polymerization, dissolution suspension, interfacial polymerization, dispersion polymerization, emulsion agglomeration or the like.

In the present invention, it is preferable for the base particles C to be particles obtained in an aqueous medium.

In the case when the base particles C are produced in an aqueous medium, the surfaces of the base particles C may easily come into a state of being relatively highly hydrophilic, compared with those produced by a dry-process production method. Accordingly, in making the fine resin particles s adhere to the surfaces of the base particles C, the fine particles may easily be made to agglomerate on the surfaces of the base particles C, and the fine particles can be made to adhere thereto more firmly.

In addition, it is preferable in view of productivity that the base particles C are particles obtained by suspension polymerization or particles obtained by agglomeration of emulsified resin particles.

The toner of the present invention may preferably have an inorganic fine powder on the surfaces of toner particles. The inorganic fine powder is externally added to toner particles and blended, in order to improve the fluidity of the toner and make the toner uniformly chargeable, and the inorganic fine powder thus added is present in the state it adheres uniformly to the toner particle surfaces.

The inorganic fine powder in the present invention may preferably have a number average particle diameter (D1) of from 4 nm or more to 80 nm or less as primary particles.

As the inorganic fine powder used in the present invention, an inorganic fine powder selected from fine powders of silica, alumina and titania or double oxides of any of these may be used. Such a fine double oxide powder may include, e.g., fine aluminum silicate powder and fine strontium titanate powder. Also, as the fine silica powder, usable are, e.g., what is called dry-process silica or fumed silica produced by vapor phase oxidation of a silicon halide and what is called wet-process silica produced from water glass or the like, either of which may be used. The dry-process silica is preferred, as having less silanol groups on the particle surfaces and interiors of the fine silica powder and leaving less production residues such as $Na_2O$ and $SO_3^{2-}$. In the dry-process silica, it is also possible to use, e.g., in its production step, other metal halide such as aluminum chloride or titanium chloride together with the silicon halide to give a composite fine powder of silica with other metal oxide. The fine silica powder includes these as well.

The inorganic fine powder having a number average primary particle diameter of from 4 nm or more to 80 nm or less may preferably be added in an amount of from 0.1 part by mass or more to less than 5.0 parts by mass, based on 100 parts by mass of the toner particles.

In the toner of the present invention, as long as it is substantially not adversely affected, other additives may further be used, which may include, e.g., lubricant powders such as TEFLON (trademark of Du Pont), zinc stearate powder and polyvinylidene fluoride powder; abrasives such as cerium oxide powder, silicon carbide powder and strontium titanate powder; fluidity-providing agents such as titanium oxide powder and aluminum oxide powder; and anti-caking agents; as well as reverse-polarity organic and/or inorganic fine particles, which may also be used in a small quantity as a developability improver. These additives may also be used after hydrophobic treatment of their particle surfaces.

The toner of the present invention may be blended with a carrier so as to be used as a two-component developer, or may also be used as a one-component developer consisting of the toner only. In particular, where it is used as a non-magnetic one-component developer, which concerns the performance of the rise of charging, the effect of the present invention is more remarkably brought out.

In the case when the toner of the present invention is used in the two-component developer, a magnetic carrier may be used, which may include those made into fine particles of, e.g., metals such as surface-oxidized or unoxidized iron, lithium, calcium, magnesium, nickel, copper, zinc, cobalt, manganese, chromium and rare earth elements, alloys or magnetic oxides thereof, and magnetic ferrite. Further usable is a magnetic fine-particle dispersed resin carrier comprising a resin and magnetic fine-particles dispersed therein.

It is preferable for the above magnetic carrier to be coated with a resin on its particle surfaces, which may be coated by any conventionally known method such as a method in which a coating fluid prepared by dissolving or suspending a coat material such as the resin in a solvent is made to adhere to the surfaces of magnetic carrier core particles or a method in which magnetic carrier core particles and a coat material are blended in the form of powder.

The coat material with which the magnetic carrier core particles are to be coated may include, e.g., silicone resins, polyester resins, styrene resins, acrylic resins, polyamide, polyvinyl butyral, and aminoacrylate resins. Any of these may be used alone or in plurality. The amount of treatment with the coat material may preferably be from 0.1% by mass or more to 30% by mass or less, and much preferably from 0.5% by mass or more to 20% by mass or less, based on the mass of the carrier core particles. Such a carrier may preferably have an average particle diameter of from 10 $\mu$m or more to 100 $\mu$m or less, and further preferably from 20 $\mu$m or more to 70 $\mu$m or less.

Where the two-component developer is prepared by blending the toner of the present invention and the magnetic carrier, they may be blended in a proportion of from 2% by mass or more to 15% by mass or less, and preferably from 4% by mass or more to 13% by mass or less, as toner concentration in the developer, where good results are usually obtainable. If the toner concentration is less than 2% by mass, image density tends to lower. If it is more than 15% by mass, fog or in-machine toner scatter tends to occur.

How to measure respective physical properties are described below.

1. Molecular weight of polymer:

The molecular weight of the polymer is measured by gel permeation chromatography (GPC) in the following way.

First, a sample for measurement is dissolved in tetrahydrofuran (THF) at room temperature over a period of 24 hours. Then, the solution obtained is filtered with a solvent-resistant membrane filter "MAISHORIDISK" (available from Tosoh Corporation) of 0.2 $\mu$m in pore diameter to make up a sample solution. Here, the sample solution is so controlled that the component soluble in THF is in a concentration of 0.8% by mass. Using this sample solution, the measurement is made under the following conditions.

Instrument: HLC8120 GPC (detector: RI) (manufactured by Tosoh Corporation).

Columns: Combination of seven columns, Shodex KF-801, KF-802, KF-803, KF-804, KF-805, KF-806 and KF-807 (available from Showa Denko K.K.).

Eluent: Tetrahydrofuran (THF).

Flow rate: 1.0 ml/min.

Oven temperature: 40.0°C.

Amount of sample injected: 0.10 ml.

To calculate the molecular weight of the sample for measurement, a molecular weight calibration curve is used which is prepared using a standard polystyrene resin (e.g., trade name "TSK Standard Polystyrene F-850, F-450, F-288, F-128, F-80, F-40, F-20, F-10, F-4, F-2, F-1, A-5000, A-2500, A-1000, A-500"; available from Tosoh Corporation).

2. Measurement of amount of unit A in polymer:

To calculate the amount (% by mass) in the polymer, of the unit A represented by the formula (1), the level of sulfur atoms contained in the polymer is measured, and the unit A is calculated from the level of sulfur atoms thus measured. Stated specifically, the polymer is introduced into an automatic sample combustion apparatus (apparatus name: Pre-treating Apparatus for Ion Chromatograph AQF-100 Model (apparatus specification: Auto Boat Controller ABC Model, AQF-100/GA-100 Integrated Model; manufactured by DIA Instruments Co.), and the polymer is made into combustion gas, where the gas is absorbed into an absorbing solution (an aqueous solution of 30 ppm of $H_2O_2$). Next, the level of $SO_4$ contained in the absorbing solution is measured by ion chromatography (apparatus name: Ion Chromatograph ICS2000; column: IONPAC AS17; available from Japan Dionex Corporation) to calculate the level (% by mass) of sulfur atoms contained in the polymer. From the level (% by mass) of sulfur atoms in the polymer thus found, the amount (% by mass) in the polymer, of the unit A represented by the formula (1), is calculated. Here, the structure of the unit A is specified by analyses making use of NMR described later.

3. Measurement of amount of unit B in polymer:

To calculate the amount (% by mass) of the unit B in the polymer, after the amount (% by mass) of the unit A in the polymer has been calculated, the acid value of the copolymer is measured, and the amount of the unit B is calculated from the acid value thus measured. Where any other component(s) showing acid value is/are also contained, such acid value is calculated on the basis of analyses making use of NMR described later. With regard to the measurement of the acid value of the polymer, it is shown in the following paragraph.

4. Acid value of polymer:

The acid value is the number of milligrams of potassium hydroxide necessary to neutralize the acid contained in 1 g of a sample. The acid value in the present invention is measured according to JIS K 0070-1992. Stated specifically, it is measured according to the following procedure.

(i) Preparation of Reagent

1.0 g of phenolphthalein is dissolved in 90 ml of ethyl alcohol (95 vol.%), and ion-exchanged water is so added thereto as to add up to 100 ml to obtain a phenolphthalein solution.

7 g of guaranteed potassium hydroxide is dissolved in 5 ml of water, and ethyl alcohol (95 vol.%) is so added thereto as to add up to 1 liter. So as not to be exposed to carbon dioxide and so forth, this solution is put into an alkali-resistant container and then left to stand for 3 days, followed by filtration to obtain a potassium hydroxide solution. The potassium hydroxide solution obtained is stored in an alkali-resistant container. For the factor of the potassium hydroxide solution, 25 ml of 0.1 mole/liter hydrochloric acid is taken into an Erlenmeyer flask, and a few drops of the phenolphthalein solution are added thereto to carry out titration with the potassium hydroxide solution, where the factor is determined from the amount of the potassium hydroxide required for neutralization. As the 0.1 mole/liter hydrochloric acid, one

prepared according to JIS K 8001-1998 is used.

(ii) Operation

(A) Run proper:

2.0 g of the sample for measurement is precisely weighed out in a 200 ml Erlenmeyer flask, and 100 ml of a toluene-ethanol (3:1) mixed solvent is added thereto to make the former dissolve in the latter over a period of 1 hour. Next, to the solution obtained, a few drops of the phenolphthalein solution are added as an indicator to carry out titration with the above potassium hydroxide solution. Here, the end point of titration is the point of time where pale deep red of the indicator has continued for 30 seconds.

(B) Empty run:

Titration is carried out according to the same procedure as the above operation except that the sample is not used (i.e., only the toluene-ethanol (3:1) mixed solvent is used).
(iii) The results obtained are substituted for the following equation to calculate the acid value.

$$A = [(C - B] \times f \times 5.61]/S$$

where A is the acid value (mgKOH/g), B is the amount (ml) of the potassium hydroxide solution in the empty run, C is the amount (ml) of the potassium hydroxide solution in the run proper, f is the factor of the potassium hydroxide solution, and S is the sample (g).

5. Hydroxyl value of polymer:

The hydroxyl value is the number of milligrams of potassium hydroxide necessary to neutralize acetic acid bonded to hydroxyl groups, when 1 g of a sample is acetylated. The hydroxyl value in the present invention is measured according to JIS K 0070-1992. Stated specifically, it is measured according to the following procedure.

(1) Preparation of Reagent

25 g of guaranteed acetic acid anhydride is put into a 100 ml measuring flask, and pyridine is so added thereto as to add up to 100 ml in total mass, and these are thoroughly mixed by shaking to obtain an acetylating reagent. The acetylating reagent obtained is stored in a brown bottle so as not to be exposed to moisture, carbon dioxide and so forth.
1.0 g of phenolphthalein is dissolved in 90 ml of ethyl alcohol (95 vol.%), and ion-exchanged water is so added thereto as to add up to 100 ml to obtain a phenolphthalein solution.
35 g of guaranteed potassium hydroxide is dissolved in 20 ml of water, and ethyl alcohol (95 vol.%) is so added thereto as to add up to 1 liter. So as not to be exposed to carbon dioxide and so forth, this solution is put into an alkali-resistant container and then left to stand for 3 days, followed by filtration to obtain a potassium hydroxide solution. The potassium hydroxide solution obtained is stored in an alkali-resistant container. For the factor of the potassium hydroxide solution, 25 ml of 0.5 mole/liter hydrochloric acid is taken into an Erlenmeyer flask, and a few drops of the phenolphthalein solution are added thereto to carry out titration with the potassium hydroxide solution, where the factor is determined from the amount of the potassium hydroxide required for neutralization. As the 0.5 mole/liter hydrochloric acid, one prepared according to JIS K 8001-1998 is used.

(2) Operation

(A) Run proper:

1.0 g of the sample for measurement is precisely weighed out in a 200 ml round-bottom flask, and 5.0 ml of the above acetylating reagent is accurately added thereto by using a transfer pipette. Here, if the sample can not easily dissolve in the acetylating reagent, guaranteed toluene is added in a small quantity to effect dissolution.
A small funnel is placed at the mouth of the flask, and its bottom is immersed by 1 cm in a temperature 97°C glycerol bath and heated. At this point, in order to prevent the neck of the flask from being heated by the heat of the bath, it is preferable to cover the base of the neck of the flask with a cardboard sheet with a round hole made therein.

One hour later, the flask is taken out of the glycerol bath, and then left to cool. After it has been left to cool, 1 ml of water is added thereto through the funnel, followed by shaking to hydrolyze acetic anhydride. In order to further hydrolyze it completely, the flask is again heated in the glycerol bath for 10 minutes. After it has been left to cool, the walls of the funnel and flask are washed with 5 ml of ethyl alcohol.

A few drops of the above phenolphthalein solution are added as an indicator to carry out titration with the potassium hydroxide solution. Here, the end point of titration is the point of time where pale deep red of the indicator has continued for 30 seconds.

(B) Empty run:

Titration is carried out according to the same procedure as the above operation except that the sample for measurement is not used.

(3) The results obtained are substituted for the following equation to calculate the hydroxyl value.

$$A = [\{(B - C) \times 28.05 \times f\}/S] + D$$

where A is the hydroxyl value (mgKOH/g), B is the amount (ml) of the potassium hydroxide solution in the empty run, C is the amount (ml) of the potassium hydroxide solution in the run proper, f is the factor of the potassium hydroxide solution, S is the sample (g), and D is the acid value (mgKOH/g) of the sample for measurement.

6. Structural analysis of polymer:

The structure of the polymer having the units A and B and that of such polymerizable monomers each are determined using a nuclear magnetic resonance instrument ($^1$H-NMR, $^{13}$C-NMR) and an FT-IR spectrometer. The instruments used are shown below.

(i) $^1$H-NMR, $^{13}$C-NMR instrument
FT-NMR JNM-EX400, manufactured by JEOL Ltd. (solvent used: chloroform).
(ii) FT-IR spectrometer
Nicolet AVATAR360 FT-IR, manufactured by Thermo Electron Corporation.

7. Glass transition temperatures of polymer and toner:

The glass transition temperatures of the polymer and toner in the present invention are each measured with a differential scanning calorimeter (a DSC measuring instrument).

As the differential scanning calorimeter, a differential scanning calorimetric analyzer Q1000 (manufactured by TA Instruments Japan Ltd.) is used to measure the glass transition temperature according to ASTM D3418-82 in the following way. In the measurement, 2 to 5 mg, preferably 3 mg, of a sample is precisely weighed out. The sample is put into a pan made of aluminum, and an empty aluminum pan is used as a reference. After having been kept balanced at 20°C for 5 minutes, the measurement is made in a measurement range between 20°C and 140°C, under a modulation of 1.0°C/minute and at a heating rate of 1°C/minute. In the present invention, the glass transition temperature is determined by the middle-point method.

8. Measurement of particle diameter of fine resin particles:

The number.average particle diameter of the fine resin particles in the present invention may be determined in the following way.

A microtrack particle size measuring instrument HRA (X-100) (manufactured by Nikkiso Co. Ltd.) is used, and measurement range is set at from 0.001 μm to 10 μm to determine the number average particle diameter.

9. Weight average particle diameter (D4) and number average particle diameter (D1) of toner:

The weight average particle diameter (D4) and number average particle diameter (D1) of the toner in the present invention are measured by the following method. A precision particle size distribution measuring instrument "Coulter Counter Multisizer 3" (registered trade mark; manufactured by Beckman Coulter, Inc.) is used as a measuring instrument, which has an aperture tube of 100 μm in size and employing the aperture impedance method. Software "Beckman

Coulter Multisizer 3 Version 3.51" (produced by Beckman Coulter, Inc.) attached to Multisizer 3 for its exclusive use is used, which is to set the conditions for measurement and analyze the data of measurement. Here, the measurement is made through 25,000 channels as effective measuring channels in number.

As an aqueous electrolytic solution used for the measurement, a solution may be used which is prepared by dissolving guaranteed sodium chloride in ion-exchanged water in a concentration of 1% by mass, e.g., "ISOTON II" (available from Beckman Coulter, Inc.).

Here, before the measurement and analysis are made, the software for exclusive use is set in the following way.

On a "Change of Standard Measuring Method (SOM)" screen of the software for exclusive use, the total number of counts of a control mode is set to 50,000 particles. The number of time of measurement is set to one time and, as Kd value, the value is set which has been obtained using "Standard Particles, 10.0 μm" (available from Beckman Coulter, Inc.). Threshold value and noise level are automatically set by pressing "Threshold Value/Noise Level Measuring Button". Then, current is set to 1,600 μA, gain to 2, and electrolytic solution to ISOTON II, where "Flash for Aperture Tube after Measurement" is checked.

On a "Setting of Conversion from Pulse to Particle Diameter" screen of the software for exclusive use, the bin distance is set to logarithmic particle diameter, the particle diameter bin to 256 particle diameter bins, and the particle diameter range to from 2 μm to 60 μm.

A specific way of measurement is as follows:

i) 200 ml of the aqueous electrolytic solution is put into a 250 ml round-bottomed beaker made of glass which is for exclusive use in Multisizer 3 and this is set on a sample stand, where stirring with a stirrer rod is carried out at 24 revolutions/second in the anticlockwise direction. Then, "Flush of Aperture" function of the analysis software is operated to beforehand remove any dirt and air bubbles in the aperture tube.

ii) 30 ml of the aqueous electrolytic solution is put into a 100 ml flat-bottomed beaker made of glass. To this water, 0.3 ml of a dilute solution is added as a dispersant, which has been prepared by diluting "CONTAMINON N" (an aqueous 10% by mass solution of a pH 7 neutral detergent for washing precision measuring instruments which is composed of a nonionic surface-active agent, an anionic surface-active agent and an organic builder and is available from Wako Pure Chemical Industries, Ltd.) with ion-exchanged water to 3-fold by mass.

iii) An ultrasonic dispersion machine of 120 W in electric output "Ultrasonic Dispersion system TETORA 150" (manufactured by Nikkaki Bios Co.) is readied, having two oscillators of 50 kHz in oscillation frequency which are built therein in the state their phases are shifted by 180 degrees. Into a water tank of the ultrasonic dispersion machine, 3.3 liters of ion-exchanged water is put, and 2 ml of the above CONTAMINON N is added to this water tank.

iv) The beaker of the above (ii) is set to a beaker fixing hole of the ultrasonic dispersion machine, and the ultrasonic dispersion machine is set working. Then, the height position of the beaker is so adjusted that the state of resonance of the aqueous electrolytic solution surface in the beaker may become highest.

v) In the state the aqueous electrolytic solution in the beaker of the above (iv) is irradiated with ultrasonic waves, 10 mg of the toner is little by little added to the aqueous electrolytic solution and is dispersed therein. Then, such ultrasonic dispersion treatment is further continued for 60 seconds. In carrying out the ultrasonic dispersion treatment, the water temperature of the water tank is appropriately so controlled as to be 10°C or more to 40°C or less.

vi) To the round-bottomed beaker of the above (i), placed inside the sample stand, the aqueous electrolytic solution in which the toner has been dispersed in the above (v) is dropwise added by using a pipette, and the measuring concentration is so adjusted as to be 5%. Then the measurement is made until the measuring particles come to 50,000 particles in number.

vii) The data of measurement are analyzed by using the above software attached to the measuring instrument for its exclusive use, to calculate the weight average particle diameter (D4) and number average particle diameter (D1). Here, "Average Diameter" on an "Analysis/Volume Statistic Value (Arithmetic Mean)" screen when set to graph/% by volume in the software for exclusive use is the weight average particle diameter (D4), and "Average Diameter" on an "Analysis/Number Statistic Value (Arithmetic Mean)" screen when set to graph/% by number in the software for exclusive use is the number average particle diameter (D1).

## EXAMPLES

The present invention is described below in greater detail by giving working examples, which, however, by no means limit the present invention. In the following, "part(s)" refers to "part(s) by mass".

Production Examples of Monomers Represented by Formula (5)

Monomer 5A

Into a reaction vessel provided with a stirrer, a thermometer and a nitrogen feed pipe, 788 g of 2-amino-5-methoxybenzenesulfonic acid, 642 g of triethylamine and 4 liters of tetrahydrofuran were fed, and 352 g of methacrylic acid chloride was dropwise added thereto over a period of 15 minutes. While keeping the reaction system at 5°C or less, this was stirred for 6 hours. While keeping at 5°C or less the reaction mixture obtained, 800 ml of concentrated hydrochloric acid and 12.8 liters of water were added thereto by pouring to make liquid-phase separation, where the organic layer formed was washed with 6.4 liters of 2% hydrochloric acid and thereafter washed three times with 6.4 liters of water. The solution obtained was concentrated under reduced pressure to obtain crystals.

The crystals obtained were fed into a reaction vessel provided with a stirrer, a condenser, a thermometer and a nitrogen feed pipe, and 1,680 g of trimethyl orthoformate and 1.5 g of p-benzoquinone were also fed thereinto, to carry out reaction at 80°C for 10 hours. The reaction mixture obtained was cooled and then concentrated under reduced pressure. The crystals precipitated were filtered and thereafter added to 5 liters of water, and were dispersedly washed therewith, followed by filtration and then washing twice with 2.5 liters of water. The crystals obtained were dried at 30°C under following wind, and thereafter purified by column chromatography (silica gel, 5 kg; mobile phase: hexane/ethyl acetate = 1/1) to obtain 383 g of a monomer 5A represented by the following formula (5A).

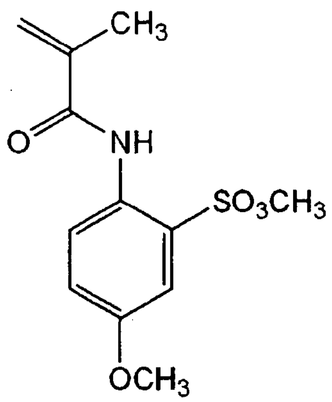

(5A)

Monomer 5B

Into a reaction vessel provided with a stirrer, a thermometer and a nitrogen feed pipe, 856 g of 2-nitrobenzenesulfonyl chloride and 7 liters of methanol were fed, and then a solution of mixture of 745 g of 28% sodium methylate and 600 ml of methanol was dropwise added thereto at 10°C or less over a period of 45 minutes. Thereafter, while keeping the reaction system at 10°C, this was stirred for 50 hours. To the reaction mixture obtained, 1.6 kg of 0.1 mol/liter hydrochloric acid was added to make the reaction mixture acidic, and further 3 liters of water was added to precipitate crystals. The crystals obtained were filtered and then washed with 2 liters of water, followed by drying under reduced pressure at 30°C for 10 hours to obtain 702 g of methyl 2-nitrobenzenesulfonate.

Into a reaction vessel provided with a stirrer, a thermometer and a nitrogen feed pipe, 688 g of the methyl 2-nitrobenzenesulfonate, 4.7 liters of acetic acid, and 2.18 kg of $SnCl{\cdot}H_2O$ were fed, and these were cooled to 10°C or less. Into this reaction vessel, hydrochloric acid gas was blown for 4 hours. Thereafter, the system was stirred at 10°C or less for 10 hours. To the reaction mixture obtained, 8.4 liters of chloroform was added and, while keeping the reaction mixture at 10°C or less, this was neutralized with an aqueous 20% NaOH solution. Further, 56 liters of water was added to make liquid-phase separation. The aqueous phase was extracted with chloroform, where the chloroform layer formed was put together and then washed twice with 4 liters of water to make liquid-phase separation. This was dried with anhydrous magnesium sulfate, and thereafter filtered to obtain to obtain a chloroform solution of methyl 2-nitrobenzenesulfonate.

The chloroform solution obtained was, together with 950 g of diethylaniline, fed into a reaction vessel provided with a stirrer, a thermometer and a nitrogen feed pipe, and 287 g of acrylic acid chloride was dropwise added thereto at 5°C or less over a period of 15 minutes. While keeping the reaction system at 5°C or less, this was stirred for 6 hours. To the reaction mixture obtained, 800 ml of concentrated hydrochloric acid and 12.8 liters of water were added by pouring to make liquid-phase separation, where the organic layer formed was washed with 6.4 liters of 2% hydrochloric acid, 6.4 liters of water, 6.4 liters of an aqueous sodium hydrogencarbonate solution and 6.4 liters of water in this order. This was dried with anhydrous magnesium sulfate, and thereafter filtered, followed by drying at 30°C under reduced pressure

to obtain 796 g of crystals. The crystals obtained were purified by column chromatography (silica gel, 5 kg; mobile phase: hexane/ethyl acetate = 2/1) to obtain 406 g of a monomer 5B represented by the following formula (5B).

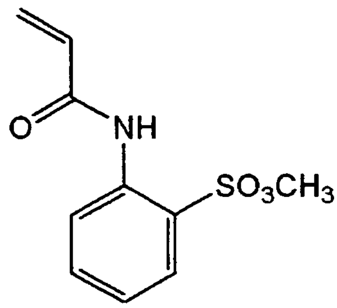

(5B)

Monomer 5C

The procedure of the production of the monomer 5A was repeated except that 726 g of p-toluidiene-2-sulfonic acid was used therein in place of the 2-amino-5-methoxybenzenesulfonic acid, to obtain 352 g of a monomer 5C represented by the following formula (5C).

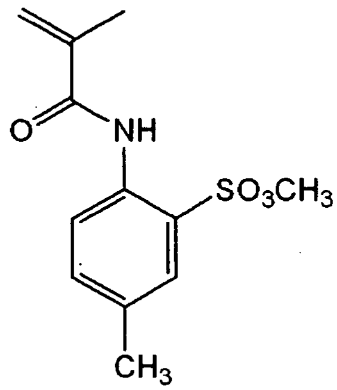

(5C)

Monomer 5D

Into a reaction vessel provided with a stirrer, a condenser, a thermometer and a nitrogen feed pipe, 1,500 g of 2-acrylamido-2-methylpropanesulfonic acid, 2,060 g of trimethyl orthoformate and 1.5 g of p-benzoquinone were fed to carry out reaction at 80°C for 5 hours. The reaction mixture obtained was cooled and then concentrated under reduced pressure. The crystals precipitated were filtered and thereafter added to 5 liters of water, and were dispersedly washed therewith, followed by filtration and then washing twice with 2.5 liters of water. The crystals obtained were dried at 30°C under following wind, and thereafter dispersedly washed with 4 liters of hexane, followed by filtration. The crystals obtained were dried at 30°C under reduced pressure to obtain 1,063 g of a monomer 5D represented by the following formula (5D).

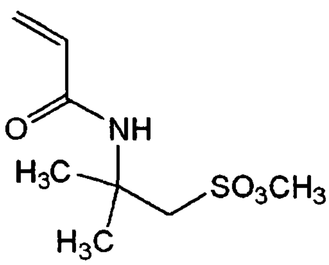

(5D)

Monomer 5E

2-Acrylamido-2-methylpropanesulfonic acid represented by the following formula (5E) was used as a monomer

5E.

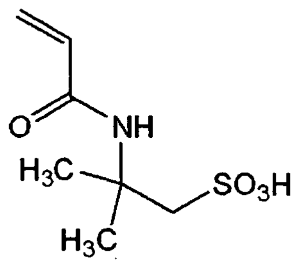

(5E)

Monomer 5F

2-Methacrylamido-5-methoxybenzenesulfonic acid represented by the following formula (5F) was used as a monomer 5F.

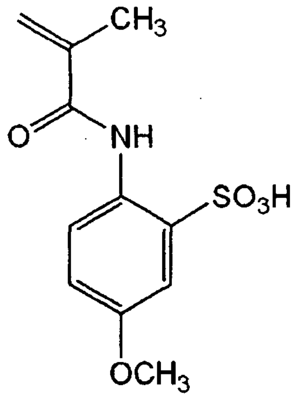

(5F)

Monomer 5G

2-Acrylamidobenzenesulfonic acid represented by the following formula (5G) was used as a monomer 5G.

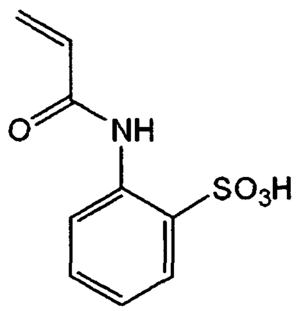

(5G)

Production Examples of Monomers Represented by Formula (6)

Monomer 6A

A monomer 6A represented by the following formula (6A) was produced by using the method disclosed in Japanese Patent Application Laid-open No.S63-270060, or Journal of Polymer Science, Polymer Chemistry, Edition 18, p.2755 (1980).

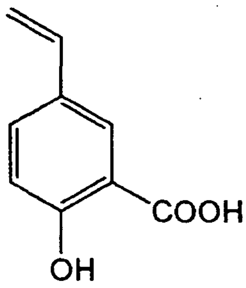

(6A)

Monomer 6B

A monomer 6B represented by the following formula (6B) was produced by using the method disclosed in Japanese Patent Application Laid-open No.S62-187429.

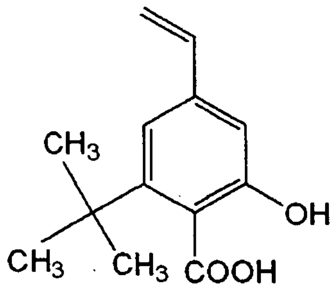

(6B)

Monomer 6C

A monomer 6C represented by the following formula (6C) was produced by using the method disclosed in Japanese Patent Application Laid-open No.S63-270060, or Journal of Polymer Science, Polymer Chemistry, Edition 18, p.2755 (1980).

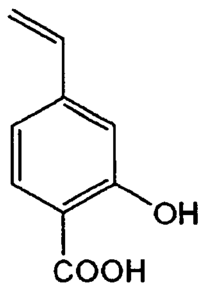

(6C)

Monomer 6D

A monomer 6D represented by the following formula (6D) was produced by using the method disclosed in Bioorganic & Medicinal Chemistry, 15(15), p.5207 (2007).

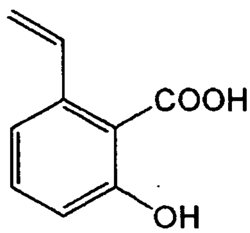

(6D)

Example 1

Into a reaction vessel provided with a stirrer, a condenser, a thermometer and a nitrogen feed pipe, 60.00 parts of toluene was fed, and was refluxed in a stream of nitrogen.

Next, the following monomers and solvent were mixed to prepare a monomer mixture.

Monomer composition & mixing ratio:

| | |
|---|---|
| Monomer 5A | 21.00 parts |
| Monomer 6A | 18.00 parts |
| Styrene | 61.00 parts |
| Toluene | 60.00 parts |

Into this monomer mixture, 6.60 parts of t-butyl peroxyisopropyl monocarbonate (a 75% hydrocarbon type solvent dilute product) as a polymerization initiator was further mixed, and the mixture obtained was dropwise added to those in the above reaction vessel over a period of 30 minutes. Its contents were stirred at 110°C for 4 hours, and then cooled to room temperature. The polymer-containing composition obtained was dropwise added to a mixed solvent of 1,400 parts of methanol and 10 parts of acetone over a period of 10 minutes with stirring, to precipitate and crystallize a resin composition. The resin composition obtained was filtered, and then washed twice with 200 parts of methanol. The resin powder obtained was dried under reduced pressure at 60°C for 10 hours to obtain a polymer A.

Examples 2 to 13 & Comparative Examples 1 to 4

Polymers B to M and R to U were obtained in the same way as in Example 1 except that the monomer formulation and mixing ratio were changed as shown in Table 1.

Table 1

| | Polymer | Monomers fed | | | | Vinyl polymer 1 fed | | Vinyl polymer 2 fed | |
|---|---|---|---|---|---|---|---|---|---|
| | | Formula (5) | | Formula (6) | | | | | |
| | | Structure | Amount (parts) | Structure | Amount (parts) | Structure | Amount (parts) | Structure | Amount (parts) |
| Example: | | | | | | | | | |
| 1 | A | 5A | 21.00 | 6A | 18.00 | Styrene | 61.00 | - | - |
| 2 | B | 5B | 21.00 | 6A | 18.00 | Styrene | 61.00 | - | - |
| 3 | C | 5C | 16.00 | 6A | 18.00 | Styrene | 66.00 | - | - |
| 4 | D | 5A | 21.00 | 6B | 12.00 | Styrene | 67.00 | - | - |
| 5 | E | 5D | 21.00 | 6C | 35.00 | Styrene | 44.00 | - | - |
| 6 | F | 5E | 0.15 | 6A | 1.50 | Styrene | 83.35 | Bu acryl. | 15.00 |
| 7 | G | 5A | 34.00 | 6A | 46.00 | Styrene | 20.00 | - | - |
| 8 | H | 5A | 0.15 | 6A | 46.00 | Styrene | 53.85 | - | - |
| 9 | I | 5A | 34.00 | 6A | 1.50 | Styrene | 49.50 | Bu acryl. | 15.00 |
| 10 | J | 5A | 0.08 | 6A | 0.75 | Styrene | 84.17 | Bu acryl. | 15.00 |
| 11 | K | 5A | 38.00 | 6A | 50.00 | Styrene | 10.00 | Bu acryl. | 2.00 |
| 12 | L | 5F | 21.00 | 6D | 18.00 | Styrene | 61.00 | - | - |
| 13 | M | 5G | 21.00 | 6B | 18.00 | Styrene | 61.00 | - | - |

(continued)

| Comparative Example: | | | | | | | | | |
|---|---|---|---|---|---|---|---|---|---|
| 1 | R | - | - | 6A | 12.00 | Styrene | 88.00 | - | - |
| 2 | S | - | - | 6B | 18.00 | Styrene | 82.00 | - | - |
| 3 | T | 5C | 21.00 | - | - | Styrene | 64.00 | Bu acryl. | 15.00 |
| 4 | U | 5D | 34.00 | - | - | Styrene | 66.00 | - | - |
| Bu acryl.: Butyl acrylate | | | | | | | | | |

Compositional ratios and molecular weights of Polymers A to M and R to U obtained in Examples 1 to 13 and Comparative Examples 1 to 4, respectively, are shown in Tables 2 and 3.

Table 2

| | Polymer | Unit A [Formula (1)] | | Unit B [Formula (2)] | | Molecular weight | |
|---|---|---|---|---|---|---|---|
| | | Structure | % by mass | Structure | % by mass | Mw | Mw/Mn |
| Example 1 | Polymer A | 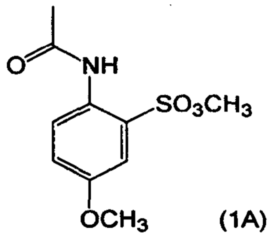 (1A) | 18.25 | 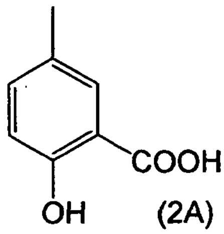 (2A) | 14.75 | 12100 | 2.3 |
| Example 2 | Polymer B | 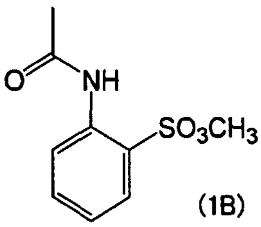 (1B) | 18.50 | (2A) | 14.60 | 11500 | 2.2 |
| Example 3 | Polymer C | 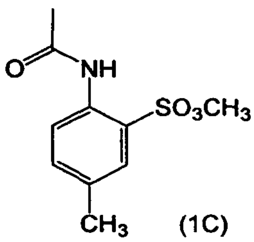 (1C) | 17.85 | (2A) | 14.50 | 12500 | 2.4 |
| Example 4 | Polymer D | (1A) | 13.85 | 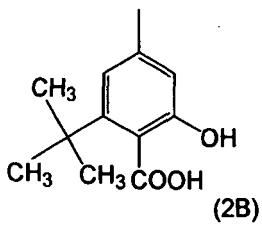 (2B) | 10.15 | 13100 | 22 |

(continued)

| | Polymer | Unit A [Formula (1)] | | Unit B [Formula (2)] | | Molecular weight | |
|---|---|---|---|---|---|---|---|
| | | Structure | % by mass | Structure | % by mass | Mw | Mw/Mn |
| Example 5 | Polymer E | 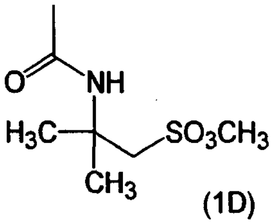 (1D) | 19.45 | 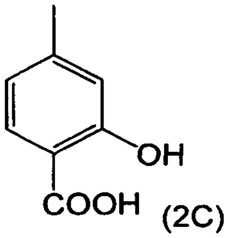 (2C) | 29.75 | 11600 | 2.3 |
| Example 6 | Polymer F | 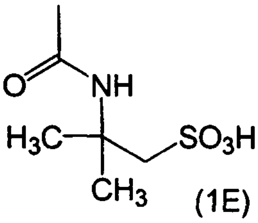 (1E) | 0.10 | (2A) | 1.05 | 9800 | 2.2 |

Table 3

| | Polymer | Unit A [Formula (1)] | | Unit B [Formula(2)] | | Molecular weight | |
|---|---|---|---|---|---|---|---|
| | | Structure | % by mass | Structure | % by mass | Mw | Mw/Mn |
| Example 7 | Polymer G | (1A) | 29.85 | (2A) | 39.75 | 14100 | 2.3 |
| Example 8 | Polymer H | (1A) | 0.10 | (2A) | 40.00 | 13200 | 2.4 |
| Example 9 | Polymer I | (1A) | 29.85 | (2A) | 1.10 | 12000 | 2.2 |
| Example 10 | Polymer J | (1A) | 0.05 | (2A) | 0.50 | 9400 | 2.3 |
| Example 11 | Polymer K | (1A) | 34.95 | (2A) | 44.75 | 13800 | 2.3 |
| Example 12 | Polymer L | 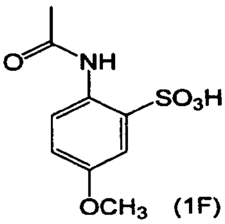 (1F) | 1725 | 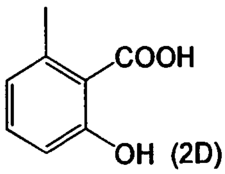 (2D) | 14.75 | 12500 | 2.4 |
| Example 13 | Polymer M | 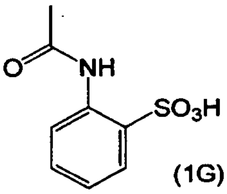 (1G) | 17.15 | (28) | 14.65 | 12300 | 2.4 |
| Comparative Example 1 | Polyme R | - | - | (2A) | 9.85 | 11800 | 2.4 |

(continued)

| | Polymer | Unit A [Formula (1)] | | Unit B [Formula(2)] | | Molecular weight | |
|---|---|---|---|---|---|---|---|
| | | Structure | % by mass | Structure | % by mass | Mw | Mw/Mn |
| Comparative Example 2 | Polymer S | - | - | (2B) | 14.75 | 12100 | 2.3 |
| Comparative Example 3 | Polymer T | (1C) | 17.65 | - | - | 13100 | 2.3 |
| Comparative Example 4 | Polymer U | 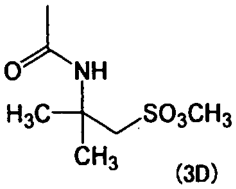 (3D) | 29.85 | - | - | 12500 | 2.2 |

Example 14

Into a reaction vessel provided with a cooling pipe, a stirrer, a thermometer and a nitrogen feed pipe, 90.0 parts of propylene glycol, 103.8 parts of terephthalic acid, 5 parts of trimellitic acid, 10.0 parts of adipic acid, 24.0 parts of maleic anhydride and 2.0 parts of tetrastearyl titanate as a condensation catalyst were introduced to carry out reaction for 6 hours while evaporating off the water being formed, at 230°C in a stream of nitrogen. Next, the reaction was carried out for 8 hours under a reduced pressure of from 5 mmHg to 20 mmHg to obtain an unsaturated polyester resin 1. This unsaturated polyester resin 1 had an acid value of 35.4 mgKOH/g, a hydroxyl value of 10.1 mgKOH/g, an Mn of 2,300 and an Mw of 4,500.

Into a reaction vessel provided with a cooling pipe, a stirrer, a thermometer and a nitrogen feed pipe, 100 parts of the above unsaturated polyester resin 1 and 20 parts of 2-amino-5-methoxybenzenesulfonic acid were introduced, and 400 parts of pyridine was added thereto, where these were stirred and thereafter 850 parts of triphenyl phosphite was added thereto, and these were heated at 120°C for 6 hours. After the reaction was completed, the reaction mixture was re-precipitated in 1,500 parts of ethanol to collect a polymer. The polymer obtained was washed twice with 300 parts of 1 mole/liter hydrochloric acid, and thereafter washed twice with 300 parts of water, followed by drying under reduced pressure. It was ascertained by $^1$H-NMR and measurement of sulfur atom level in the polymer that the polymer obtained, an unsaturated polyester resin 2, contained 11.50% by mass of a sulfonic acid unit represented by the following formula (1F). This unsaturated polyester resin 2 had an acid value of 33.2 mgKOH/g. It also had an Mn of 2,800 and an Mw of 5,100.

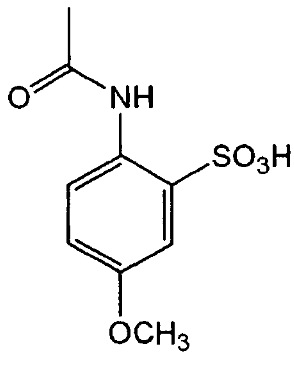

(1F)

Next, into a reaction vessel provided with a cooling pipe, a stirrer, a thermometer and a nitrogen feed pipe, 200 parts of toluene and 100 parts of the unsaturated polyester resin 2 were fed and then stirred at 50°C in a stream of nitrogen. Next, the following monomers and solvent were mixed to prepare a monomer mixture.

| | |
|---|---|
| Monomer 6A | 10 parts |
| Styrene | 40 parts |
| Toluene | 50 parts |

Into this monomer mixture, 3.50 parts of t-butyl peroxyisopropyl monocarbonate (a 75% hydrocarbon type solvent dilute product) as a polymerization initiator was further mixed, and the mixture obtained was dropwise added to those in the above reaction vessel over a period of 30 minutes. Its contents were stirred at 110°C for 3 hours, and then cooled to room temperature. The polymer-containing composition obtained was dropwise added to a mixed solvent of 2,800 parts of methanol and 20 parts of acetone over a period of 10 minutes with stirring, to precipitate and crystallize a resin composition. The resin composition obtained was filtered, and then washed twice by rinsing with 300 parts of methanol. The resin powder obtained was dried under reduced pressure at 60°C for 10 hours to obtain a polymer N. It was ascertained from the results of $^1$H-NMR that the polymer N obtained showed a peak due to salicylic acid structure. The polymer N also had an acid value of 50.8 mgKOH/g. From the fact that its acid value came higher than that of the unsaturated polyester resin 2, it was ascertained that this polymer contained a unit of a salicylic acid structure represented by the following formula (2A).
It was ascertained by measurement of sulfur atom level in the polymer that the unit represented by the formula (IF) was present in an amount of 8.50% by mass. It was also ascertained from the acid value that the unit represented by the formula (2A) was present in an amount of 4.30% by mass. The polymer N also had an Mn of 3,800 and an Mw of 8,800.

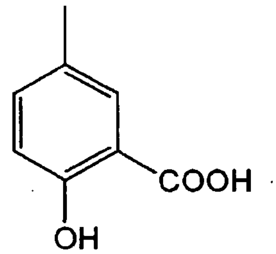

(2A)

Example 15

A polymer O was obtained in the same way as in Example 14 except that, in Example 14, 2-aminobenzenesulfonic acid was used therein in place of the 2-amino-5-methoxybenzenesulfonic acid and that the monomer 6D was used therein in place of the monomer 6A. It was ascertained from the results of $^1$H-NMR that the polymer O obtained contained a sulfonic acid unit represented by the following formula (1G) and a unit of a salicylic acid structure represented by the following formula (2D). It was ascertained by measurement of sulfur atom level in the polymer that the unit represented by the formula (1G) was present in an amount of 8.20% by mass. The polymer O had an acid value of 51.5 mgKOH/g, and it was also ascertained from the acid value that the unit represented by the formula (2D) was present in an amount of 4.50% by mass. The polymer had an Mn of 3,700 and an Mw of 8,600.

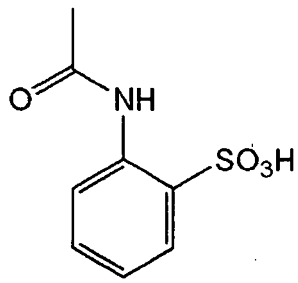

(1G)

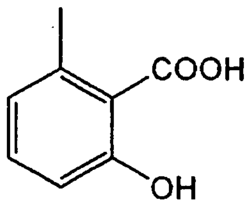

(2D)

Example 16

Into a reaction vessel provided with a cooling pipe, a stirrer, a thermometer and a nitrogen feed pipe, 100 parts

of the above unsaturated polyester resin 1 and 30 parts of 4-aminosalicylic acid were introduced, and 400 parts of pyridine was added thereto, where these were stirred and thereafter 850 parts of triphenyl phosphite was added thereto, and these were heated at 120°C for 6 hours. After the reaction was completed, the reaction mixture was re-precipitated in 1,500 parts of ethanol to collect a polymer. The polymer obtained was washed twice with 300 parts of 1 mole/liter hydrochloric acid, and thereafter washed twice with 300 parts of water, followed by drying under reduced pressure. It was ascertained from the results of $^1$H-NMR that the polymer obtained, an unsaturated polyester resin 3, contained a unit of a salicylic acid structure represented by the following formula (2C). It was ascertained from the results of $^1$H-NMR that the unit of the salicylic acid structure represented by the formula (2C) was present in an amount of 4.00% by mass. This unsaturated polyester resin 3 had an acid value of 34.0 mgKOH/g, and had an Mn of 2,600 and an Mw of 4,800.

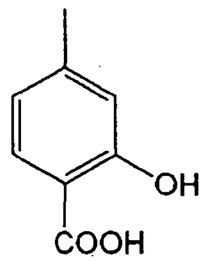

(2C)

Next, into a reaction vessel provided with a cooling pipe, a stirrer, a thermometer and a nitrogen feed pipe, 200 parts of toluene and 100 parts of the unsaturated polyester resin 3 were fed and then stirred at 50°C in a stream of nitrogen. Next, the following monomers and solvent were mixed to prepare a monomer mixture.

| | |
|---|---|
| Monomer 5E | 10 parts |
| Styrene | 40 parts |
| Toluene | 50 parts |

Into this monomer mixture, 3.50 parts of t-butyl peroxyisopropyl monocarbonate (a 75% hydrocarbon type solvent dilute product) as a polymerization initiator was further mixed, and the mixture obtained was dropwise added to those in the above reaction vessel over a period of 30 minutes. Its contents were stirred at 110°C for 4 hours, and then cooled to room temperature. The polymer-containing composition obtained was dropwise added to a mixed solvent of 2,800 parts of methanol and 20 parts of acetone over a period of 10 minutes with stirring, to precipitate and crystallize a resin composition. The resin composition obtained was filtered, and then washed twice by rinsing with 300 parts of methanol. The resin powder obtained was dried under reduced pressure at 60°C for 10 hours to obtain a polymer P. It was ascertained from the results of $^1$H-NMR that the polymer P obtained contained a sulfonic acid unit represented by the following formula (IE) and a unit of a salicylic acid structure represented by the formula (2C). It was also ascertained by measurement of sulfur atom level in the polymer that the unit represented by the formula (IE) was present in an amount of 6.20% by mass. It was still also ascertained from the results of $^1$H-NMR that the unit of the salicylic acid structure represented by the formula (2C) was present in an amount of 3.25% by mass. The polymer P also had an acid value of 51.2 mgKOH/g, and had an Mn of 4,500 and an Mw of 9,500.

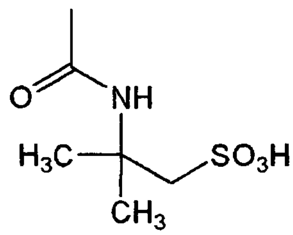

(1E)

Example 17

Into a reaction vessel provided with a cooling pipe, a stirrer, a thermometer and a nitrogen feed pipe, 90.0 parts of bisphenol-A propylene oxide 2-mole addition product, 103.8 parts of terephthalic acid, 5.0 parts of trimellitic anhydride, 7.0 parts of adipic acid and 2.0 parts of tetrastearyl titanate as a condensation catalyst were introduced to carry out reaction for 5 hours while evaporating off the water being formed, at 230°C in a stream of nitrogen. Next, the reaction

was carried out for 8 hours under a reduced pressure of from 5 mmHg to 20 mmHg to obtain a polyester resin 4. This polyester resin 4 had an acid value of 45.4 mgKOH/g, a hydroxyl value of 8.0 mgKOH/g, an Mn of 4,800 and an Mw of 9,200.

Next, into a reaction vessel provided with a cooling pipe, a stirrer, a thermometer and a nitrogen feed pipe, 100 parts of the polyester resin 4 and 10 parts of 2-amino-5-methoxybenzenesulfonic acid were introduced, and 380 parts of pyridine was added thereto, where these were stirred and thereafter 135 parts of triphenyl phosphite was added thereto, and these were heated at 120°C for 6 hours. After the reaction was completed, the reaction mixture was re-precipitated in 500 parts of ethanol to collect a polymer. The polymer obtained was washed twice with 200 parts of 1 mole/liter hydrochloric acid, and thereafter washed twice with 200 parts of water, followed by drying under reduced pressure. It was ascertained by $^1$H-NMR and measurement of sulfur atom level in the polymer that the polymer obtained, a polyester resin 5, contained 6.40% by mass of a sulfonic acid unit represented by the formula (1F). This polyester resin 5 had an acid value of 43.0 mgKOH/g, an Mn of 5,000 and an Mw of 9,800.

Next, into a reaction vessel provided with a cooling pipe, a stirrer, a thermometer and a nitrogen feed pipe, 100 parts of the polyester resin 5 and 12 parts of 5-aminosalicylic acid were introduced, and 380 parts of pyridine was added thereto, where these were stirred and thereafter 135 parts of triphenyl phosphite was added thereto, and these were heated at 120°C for 6 hours. After the reaction was completed, the reaction mixture was re-precipitated in 500 parts of ethanol to collect a polymer. The polymer obtained was washed twice with 200 parts of 1N hydrochloric acid, and thereafter washed twice with 200 parts of water, followed by drying under reduced pressure to obtain a polymer Q. It was ascertained from the results of $^1$H-NMR that the polymer Q obtained contained a sulfonic acid unit represented by the formula (IF) and a unit of a salicylic acid structure represented by the formula (2A). It was ascertained by measurement of sulfur atom level in the polymer that the unit represented by the formula (IF) was present in an amount of 5.80% by mass. It was also ascertained from the results of $^1$H-NMR that the unit of the salicylic acid structure represented by the formula (2A) was present in an amount of 3.50% by mass. The polymer Q also had an acid value of 41.1 mgKOH/g, an Mn of 5,200 and an Mw of 10,100.

Comparative Example 5

The unsaturated polyester resin 3 produced in Example 16 was used as a polymer V.

Comparative Example 6

The unsaturated polyester resin 2 produced in Example 14 was used as a polymer W.

Evaluation of Rise of Charging, Charging Stability & Electric Charge Dissipation Performance of Polymer

1.0 g of each polymer was dissolved in 10 g of tetrahydrofuran (a product containing no stabilizing agent). The solution obtained was applied onto an aluminum sheet substrate of 0.5 mm in thickness by wire bar coating, followed by drying to produce a resin film of 3.0 μm in layer thickness. The resin film thus produced was cut into a square sheet sample of 5 cm on each side.

An electrostatic-charge testing equipment EPA8100 (manufactured by Kawaguchi Electric Works Co., Ltd.) was used to evaluate the rise of charging, charging stability and electric-charge dissipation performance. This equipment was provided with a corona charging assembly and a potential measuring device on the part of a turn table, where any shift of charge potential that was caused by the corona charging assembly and any change in potential (dissipation behavior) that came thereafter were observed on an oscilloscope. Here, the rotational speed of the turn table and the conditions of the corona charging assembly were set as shown below, and the surface potential of the sheet sample was measured according to measuring procedures (1) and (2). Rotational speed of turn table: 40 rpm.
Distance from center to measurement center: 85 mm.
Setting of corona charging assembly:

Grid bias: -1,000 V.
Corona current value: -30 μA.
Measuring procedure (1): The rise of charge potential in the ON state of the corona charging assembly was measured for 120 seconds.
Measuring procedure (2): The shift of the fall of potential in the OFF state of the corona charging assembly was measured for 120 seconds.

Evaluation standards were set in the following way.

Evaluation of rise of charging:

The point in time where the gain of charge potential per second came to 1% of charge quantity was defined to be the saturation of charging, and the rise of charging from the point in time where the corona charging assembly was set to the ON state was ranked as shown in Table 4.

Evaluation of stability of charging:

The rate (%) of change in charge quantity for 30 seconds from the value of the saturation of charging was measured, and was ranked as shown in Table 4.

Evaluation of electric-charge dissipation performance:

When calculated from the time of OFF of the charging assembly in the measuring procedure (2), the time (second) by which the charge potential came to 80% with respect to the charge potential at the time the corona charging assembly was set to the OFF state was measured, and was ranked as shown in Table 4.

These were each measured three times, and their average values were taken as the values of physical properties the polymers have. The results of evaluation are shown in Table 5.

Table 4

| Evaluation rank | Charging rise performance | Charging stability | Electric-charge dissipation performance |
|---|---|---|---|
| A | Less than 12.0 seconds | 0% or more to less than 0.50% | Less than 24.0 seconds |
| B | 12.0 seconds or more to less than 15.0 seconds | 0.50% or more to less than 0.80% | 24.0 seconds or more to less than 28.0 seconds |
| C | 15.0 seconds or more to less than 18.0 seconds | 0.80% or more to less than 1.10% | 28.0 seconds or more to less than 32.0 seconds |
| D | 18.0 seconds or more to less than 24.0 seconds | 1.10% or more to less than 1.50% | 32.0 seconds or more to less than 36.0 seconds |
| E | 24.0 seconds or more | 1.50% or more | 36.0 seconds or more |

Table 5

| | Polymer | Charging rise performance (sec.) | Charging stability (%) | Electric= charge dissipation performance (sec.) |
|---|---|---|---|---|
| Example: | | | | |
| 1 | Polymer A | 10.5 | 0.28 | 21.5 |
| 2 | Polymer B | 9.8 | 0.27 | 20.8 |
| 3 | Polymer C | 10.7 | 0.35 | 22.6 |
| 4 | Polymer D | 11.3 | 0.37 | 22.9 |
| 5 | Polymer E | 11.0 | 0.29 | 21.9 |
| 6 | Polymer F | 14.4 | 0.44 | 27.0 |
| 7 | Polymer G | 10.6 | 0.74 | 23.1 |
| 8 | Polymer H | 14.3 | 0.61 | 21.3 |
| 9 | Polymer I | 13.2 | 0.38 | 23.4 |
| 10 | Polymer J | 17.4 | 0.73 | 27.4 |
| 11 | Polymer K | 14.2 | 1.05 | 26.3 |
| 12 | Polymer L | 10.8 | 0.31 | 22.0 |

(continued)

| | Polymer | Charging rise performance (sec.) | Charging stability (%) | Electric= charge dissipation performance (sec.) |
|---|---|---|---|---|
| Example: | | | | |
| 13 | Polymer M | 11.1 | 0.39 | 22.7 |
| 14 | Polymer N | 11.0 | 0.37 | 22.6 |
| 15 | Polymer O | 10.9 | 0.34 | 22.5 |
| 16 | Polymer P | 11.2 | 0.32 | 23.1 |
| 17 | Polymer Q | 11.0 | 0.38 | 22.9 |
| Comparative Example: | | | | |
| 1 | Polymer R | 23.1 | 1.58 | 26.7 |
| 2 | Polymer S | 24.4 | 1.39 | 25.9 |
| 3 | Polymer T | 13.7 | 0.92 | 36.9 |
| 4 | Polymer U | 14.1 | 1.01 | 36.8 |
| 5 | Polymer V | 24.3 | 1.33 | 26.2 |
| 6 | Polymer W | 13.9 | 0.99 | 36.2 |

As the result, it was ascertainable that the polymers A to Q in Examples according to the present invention were superior to the polymers R to W in Comparative Examples, in the rise of charging, the stability of charging and the electric-charge dissipation performance.

Toner Production Examples

Example 18

Preparation of pigment-dispersed paste:

| | |
|---|---|
| Styrene | 80 parts |
| C.I. Pigment Blue 15:3 | 13 parts |

The above materials were well pre-mixed in a container, and the mixture obtained was, while being kept at 20°C or less, put to dispersion for 4 hours by means of a bead mill to prepare a pigment-dispersed paste.

Production of toner particles:

In 1,150 parts of ion-exchanged water, 390 parts of an aqueous 0.1 mol/liter $Na_3PO_4$ solution was introduced, followed by heating to 60°C and thereafter stirring at 11,100 rpm by means of CLEAMIX (manufactured by $M_{TECHNIQUE}$ Co., Ltd.). To the resultant mixture, 58 parts of an aqueous 1.0 mol/liter $CaCl_2$ solution was added to obtain a dispersion medium containing $Ca_3(PO_4)_2$.

| | |
|---|---|
| Above pigment-dispersed paste | 46.0 parts |
| Styrene | 42.0 parts |
| n-Butyl acrylate | 18.0 parts |
| Aliphatic hydrocarbon wax | 10.0 parts |
| (Mw: 1,850; Mw/Mn: 1.27; maximum endothermic peak temperature: 78.6°C) | |
| Saturated polyester resin | 5.0 parts |
| (terephthalic acid-propylene oxide modified bisphenol A copolymer; acid value: 10 mgKOH/g; Mw: 16,000) | |
| Polymer A obtained in Example 1 | 2.0 parts |

These materials were heated to 60°C to dissolve or disperse the materials to make up a monomer mixture. Further, while keeping it at 60°C, 5.0 parts of a 2,2'-azobis(2,4-dimethylvaleronitrile) was added and dissolved therein as a polymerization initiator to prepare a monomer composition.

This monomer composition was introduced into the above dispersion medium. These were stirred at 60°C for 20 minutes at 10,000 rpm by means of CLEAMIX in an atmosphere of nitrogen to granulate the monomer composition. Thereafter, the granulated product obtained was stirred with a paddle stirring blade, during which the reaction was carried out at 60°C for 5 hours. Thereafter, this was further stirred at 80°C for 5 hours to complete the polymerization of the polymerizable monomers. The product obtained was cooled to room temperature, and thereafter hydrochloric acid was added thereto to dissolve the $Ca_3(PO_4)_2$ left on the particle surfaces, followed by filtration, water washing, drying and further classification to obtain toner particles 1.

Production of toner:

To 100 parts of the toner particles thus obtained, 1 part of hydrophobic fine silica powder treated with hexamethyldisilazane and thereafter further treated with silicone oil, having a number average primary particle diameter of 9 nm and having a BET specific surface area of 180 $m^2/g$ was mixed and externally added by means of Henschel mixer (manufactured by Mitsui Miike Engineering Corporation) to obtain a toner 1.

Example 19

Preparation of pigment-dispersed paste:

| | |
|---|---|
| Styrene | 80.0 parts |
| Carbon black | 13.0 parts |

The above materials were well pre-mixed in a container, and the mixture obtained was, while being kept at 20°C or less, put to dispersion for 4 hours by means of a bead mill to prepare a pigment-dispersed paste.

Production of toner particles:

In 1,200 parts of ion-exchanged water, 350 parts of an aqueous 0.1 mol/liter $Na_3PO_4$ solution was introduced, followed by heating to 60°C and thereafter stirring at 11,000 rpm by means of CLEAMIX (manufactured by $M_{TECHNIQUE}$ Co., Ltd.). To the resultant mixture, 52 parts of an aqueous 1.0 mol/liter $CaCl_2$ solution was added to obtain a dispersion medium containing $Ca_3(PO_4)_2$.

| | |
|---|---|
| Above pigment-dispersed paste | 46.0 parts |
| Styrene | 39.0 parts |
| n-Butyl acrylate | 22.0 parts |
| Ester wax | 13.0 parts |
| (chief component: $C_{19}H_{39}COOC_{20}H_{41}$; maximum endothermic peak temperature: 68.6°C) | |
| Saturated polyester resin | 5.0 parts |
| (terephthalic acid-propylene oxide modified bisphenol A copolymer; acid value: 10 mgKOH/g; Mw: 16,000) | |
| Polymer D obtained in Example 4 | 2.0 parts |

These materials were heated to 60°C to dissolve or disperse the materials to make up a monomer mixture. Further, while keeping it at 60°C, 5.0 parts of a 2,2'-azobis(2,4-dimethylvaleronitrile) was added and dissolved therein as a polymerization initiator to prepare a monomer composition.

This monomer composition was introduced into the above dispersion medium. These were stirred at 60°C for 20 minutes at 10,000 rpm by means of CLEAMIX in an atmosphere of nitrogen to granulate the monomer composition. Thereafter, the granulated product obtained was stirred with a paddle stirring blade, during which the reaction was carried out at 60°C for 5 hours. Thereafter, this was further stirred at 80°C for 5 hours to complete the polymerization of the polymerizable monomers. The product obtained was cooled to room temperature, and thereafter hydrochloric acid was added thereto to dissolve the $Ca_3(PO_4)_2$ left on the particle surfaces, followed by filtration, water washing, drying and further classification to obtain toner particles 2. Further, in the same way as in the production of toner in Example 18,

the hydrophobic fine silica powder was externally added to obtain a toner 2.

Example 20

A toner 3 was obtained in the same way as in Example 18 except that in Example 18, in place of the polymer A, it was changed for the polymer E obtained in Example 5.

Example 21

A toner 4 was obtained in the same way as in Example 19 except that in Example 19, in place of the polymer D, it was changed for 3.0 parts of the polymer J obtained in Example 10.

Example 22

A toner 5 was obtained in the same way as in Example 18 except that in Example 18, in place of the polymer A, it was changed for 1.0 part of the polymer K obtained in Example 11.

Example 23

A toner 6 was obtained in the same way as in Example 18 except that in Example 18, in place of the polymer A, it was changed for the polymer L obtained in Example 12.

Example 24

A toner 7 was obtained in the same way as in Example 18 except that in Example 18, in place of the polymer A, it was changed for the polymer N obtained in Example 14.

Example 25

A toner 8 was obtained in the same way as in Example 18 except that in Example 18, in place of the polymer A, it was changed for the polymer O obtained in Example 15.

Example 26

A toner 9 was obtained in the same way as in Example 18 except that in Example 18, in place of the polymer A, it was changed for the polymer P obtained in Example 16.

Example 27

A toner 10 was obtained in the same way as in Example 18 except that in Example 18, in place of the polymer A, it was changed for the polymer Q obtained in Example 17.

Example 28

Preparation of fine-particle dispersion:

The polymer L was so dissolved in acetone as to be in a solid content ratio of 75% by mass to prepare a solution. Then, this was dropwise added to 100 parts of ion-exchanged water in a container with stirring, to effect emulsification. Further, the inside of the container was brought to a reduced pressure of 100 mmHg, where the acetone was evaporated off. The emulsified product was so diluted as to be in a solid content ratio of 15% by mass to prepare a dispersion of fine particles L. Number average particle diameter (D1) of the fine particles L was measured to find that it was 90 nm.

Preparation of base-particle dispersion:

A base-particle dispersion was prepared in the manner shown below.

| | |
|---|---|
| Styrene | 80.0 parts |

(continued)

| | |
|---|---|
| C.I. Pigment Blue 15:3 | 13.0 parts |

The above materials were well pre-mixed in a container, and the mixture obtained was, while being kept at 20°C or less, put to dispersion for 4 hours by means of a bead mill to prepare a pigment-dispersed paste.

Next, in 1,150 parts of ion-exchanged water, 390 parts of an aqueous 0.1 mol/liter $Na_3PO_4$ solution was introduced, followed by heating to 60°C and thereafter stirring at 13,000 rpm by means of CLEAMIX (manufactured by $M_{TECHNIQUE}$ Co., Ltd.). To the resultant mixture, 58 parts of an aqueous 1.0 mol/liter $CaCl_2$ solution was added to obtain a dispersion medium containing $Ca_3(PO_4)_2$.

| | |
|---|---|
| Above pigment-dispersed paste | 46.5 parts |
| Styrene | 42.0 parts |
| n-Butyl acrylate | 19.0 parts |
| Paraffin wax | 9.0 parts |
| (Mw: 1,810; Mw/Mn: 1.20; maximum endothermic peak temperature: 72°C) | |
| Polyester resin | 5.0 parts |
| (terephthalic acid-propylene oxide modified bisphenol A copolymer; acid value: 13 mgKOH/g; Mw: 14,300) | |

These materials were heated to 60°C to dissolve or disperse the materials to make up a monomer mixture. Further, while keeping it at 60°C, 3.0 parts of a 2,2'-azobis(2,4-dimethylvaleronitrile) was added and dissolved therein as a polymerization initiator to prepare a monomer composition.

This monomer composition was introduced into the above dispersion medium. These were stirred at a temperature 60°C for 15 minutes at 13,000 rpm by means of CLEAMIX in an atmosphere of nitrogen to granulate the monomer composition. Thereafter, the granulated product obtained was stirred with a paddle stirring blade, during which the reaction was carried out at 60°C for 5 hours. Thereafter, this was stirred at 80°C for 5 hours, and the product obtained was cooled to room temperature to obtain a dispersion of base particles L.

A portion of the dispersion thus obtained was weighed out, and hydrochloric acid was added thereto to dissolve the $Ca_3(PO_4)_2$ left on the particle surfaces, followed by filtration, water washing and drying, where the content of the base particles was measured. According the results of measurement, the dispersion of base particles L was diluted with ion-exchanged water to adjust the content of base particles so as to be 15% by mass.

Production of toner particles:

To 100.0 parts of the dispersion of base particles L, 5.0 parts of the dispersion of fine particles L was gently added and, to the mixture obtained, 1 mole/liter hydrochloric acid was dropwise added while so taking care that the pH in the system changed gently, to lower the pH until it came to 1.5. Further, the temperature of an oil bath for heating was raised to 62°C, at which the system was retained for 2 hours. Observation with an optical microscope ascertained particles having a weight average particle diameter (D4) of 6.8 μm. The dispersion obtained was filtered, and then washed with ion-exchanged water, followed by drying and then classification to obtain toner particles 11. Further, in the same way as in the production of toner in Example 18, the hydrophobic fine silica powder was externally added to the toner particles 11 to obtain a toner 11.

Example 29

Preparation of fine-particle dispersion:

A dispersion of fine particles G was obtained by preparing it in the same way as in Example 28 except that, in place of the polymer L used in preparing the fine-particle dispersion of Example 28, it was changed for the polymer G obtained in Example 7. Number average particle diameter (D1) of the fine particles G was measured to find that it was 20 nm.

Production of toner particles:

A toner 12 was obtained by producing it in the same way as in Example 28 except that, in place of the fine particles L used in producing the toner particles of Example 28, it was changed for 2 parts of the fine particles G.

Example 30

Preparation of fine-particle dispersion:

A dispersion of fine particles D was obtained by preparing it in the same way as in Example 28 except that, in place of the polymer L used in preparing the fine-particle dispersion of Example 28, it was changed for the polymer D obtained in Example 4. Number average particle diameter (D1) of the fine particles D was measured to find that it was 150 nm.

Production of toner particles:

A toner 13 was obtained by producing it in the same way as in Example 28 except that, in place of the fine particles L used in producing the toner particles of Example 28, it was changed for 10 parts of the fine particles D.

Comparative Example 7

A toner 14 was obtained by producing it in the same way as in Example 18 except that in Example 18, in place of the polymer A, it was changed for the polymer S obtained in Comparative Example 2.

Comparative Example 8

A toner 15 was obtained by producing it in the same way as in Example 18 except that in Example 18, in place of the polymer A, it was changed for the polymer U obtained in Comparative Example 4.

Comparative Example 9

A toner 16 was obtained by producing it in the same way as in Example 18 except that the polymer A was not used in Example 18.

The weight average particle diameter (D4) and glass transition temperature (Tg) of each of the toners 1 to 16 are shown in Table 6.

Table 6

| | Toner | Polymer | Weight average particle diameter D4 (μm) | Glass transition temperature Tg (°C) |
|---|---|---|---|---|
| Example: | | | | |
| 18 | Toner 1 | Polymer A | 6.2 | 57.6 |
| 19 | Toner 2 | Polymer D | 6.3 | 58.4 |
| 20 | Toner 3 | Polymer E | 6.0 | 58.3 |
| 21 | Toner 4 | Polymer J | 6.5 | 58.7 |
| 22 | Toner 5 | Polymer K | 5.9 | 58.1 |
| 23 | Toner 6 | Polymer L | 6.4 | 57.8 |
| 24 | Toner 7 | Polymer N | 6.1 | 58.0 |
| 25 | Toner 8 | Polymer O | 6.0 | 57.9 |
| 26 | Toner 9 | Polymer P | 6.3 | 58.1 |
| 27 | Toner 10 | Polymer Q | 6.2 | 58.3 |
| 28 | Toner 11 | Polymer L | 6.8 | 58.4 |
| 29 | Toner 12 | Polymer G | 6.7 | 58.0 |
| 30 | Toner 13 | Polymer D | 7.2 | 59.0 |

(continued)

| Comparative Example: | | | | |
|---|---|---|---|---|
| 7 | Toner 14 | Polymer S | 6.4 | 58.8 |
| 8 | Toner 15 | Polymer U | 6.2 | 58.2 |
| 9 | Toner 16 | None | 6.7 | 58.0 |

The toners 1 to 16 obtained here were each so blended with a ferrite carrier F813-300 (available from Powder Teck Co.) as to be in a toner concentration of 7.0% by mass to make up two-component developers.

The toners and two-component developers thus obtained were evaluated in the following way.

Evaluation of Rise Performance & Environmental Dependence of Toner Charging

Each two-component developer was dispensed in an amount of 50 g, and was left to stand for 4 days in each environment of a low-temperature and low-humidity environment (L/L: 15°C/15%RH) and a high-temperature and high-humidity environment (H/H: 30°C/80%RH). Thereafter, this was put into a 50 ml plastic container, and then brought to each of shaking 20 times over a period of 10 seconds and shaking 300 times over a period of 2 minutes and 30 seconds, where the charge quantity was measured with an instrument shown in Fig. 1. For the evaluation, the absolute value of triboelectric charge quantity for each shaking frequency was measured to make judgment according to the following criteria. The results are shown in Table 7.

Charging rise performance:

In the low-temperature and low-humidity environment and the high-temperature and high-humidity environment each, the performance was evaluated by the proportion of the absolute value of triboelectric charge quantity at the time of the 20-time shaking to the absolute value of triboelectric charge quantity after the 300-time shaking.
Rank A: 90% or more.
Rank B: 80% or more to less than 90%.
Rank C: 70% or more to less than 80%.
Rank D: Less than 70%.

Environmental dependence:

The environmental dependence of charging was evaluated by the difference in triboelectric charge quantity at the time of the 300-time shaking between that in the low-temperature and low-humidity environment and that in the high-temperature and high-humidity environment.
Rank A: Less than 15 mC/kg.
Rank B: 15 mC/kg or more to less than 20 mC/kg.
Rank C: 20 mC/kg or more to less than 30 mC/kg.
Rank D: 30 mC/kg or more.

How to measure charge quantity:

0.5 g of the two-component developer the triboelectric charge quantity of which is to be measured is put into a measuring container 2 made of a metal and at the bottom of which a screen 3 of 500 meshes (mesh opening: 25 μm) is provided, and the container is covered with a plate 4 made of a metal. The total mass of the measuring container 2 at this point is weighed and is expressed as W1 (g). Next, in a suction device 1 (made of an insulating material at least at the part coming into contact with the measuring container 2), air is sucked from a suction opening 7 and an air-flow control valve 6 is operated to control the pressure indicated by a vacuum indicator 5, to be 250 mmAq. In this state, suction is sufficiently carried out, preferably for 2 minutes, to remove the developer by suction. The potential indicated by a potential meter 9 at this point is expressed as V (volt). Here, reference numeral 8 denotes a capacitor, whose capacitance is expressed as C (μF). The total mass of the measuring container after the suction is weighed and is expressed as W2 (g). The triboelectric charge quantity (mC/kg) of this developer is calculated as in the following expression.

$$\text{Triboelectric charge quantity (mC/kg)} = (C \times V)/(W1-W2).$$

Table 7

| | Toner | Charging rise performance (%) | | Environmental dependence (mC/kg) |
|---|---|---|---|---|
| | | L/L | H/H | |
| Example: | | | | |
| 18 | Toner 1 | 95 | 96 | 10 |
| 19 | Toner 2 | 95 | 95 | 10 |
| 20 | Toner 3 | 93 | 91 | 12 |
| 21 | Toner 4 | 82 | 85 | 14 |
| 22 | Toner 5 | 84 | 88 | 14 |
| 23 | Toner 6 | 94 | 96 | 10 |
| 24 | Toner 7 | 85 | 91 | 19 |
| 25 | Toner 8 | 84 | 90 | 17 |
| 26 | Toner 9 | 91 | 83 | 18 |
| 27 | Toner 10 | 85 | 84 | 20 |
| 28 | Toner 11 | 95 | 96 | 8 |
| 29 | Toner 12 | 93 | 95 | 10 |
| 30 | Toner 13 | 96 | 98 | 8 |
| Comparative Example: | | | | |
| 7 | Toner 14 | 73 | 75 | 32 |
| 8 | Toner 15 | 76 | 78 | 24 |
| 9 | Toner 16 | 61 | 64 | 34 |

As the result, it was seen that the toners of Examples 18 to 30 according to the present invention were superior to the toners of Comparative Examples 7 to 9, in the rise performance and environmental dependence of charging.

Next, images were formed by using the toners 1 to 16, and the.images obtained were evaluated.

Evaluation of image reproduction:

Using as an evaluation machine a conversion machine (process speed: 200 mm/sec) of a full-color laser beam printer LBP-5300 (manufactured by CANON INC.), images were reproduced at 23°C/60%RH (normal-temperature and normal-humidity environment) and at 30°C/80%RH (high-temperature and high-humidity environment). To make the evaluation, a cartridge for image reproduction which was filled with 150 g of each toner was mounted to a cyan station, and dummy cartridges were mounted to the other stations. Here, in evaluating the image reproduction, the cartridge for image reproduction was left to stand for 4 days in each environment, and thereafter the evaluation was made.

In the evaluation of image reproduction, image density and fog were measured setting the reproduction on the 1st sheet to the 5th sheet as an initial stage 1, that on the 45th sheet to the 50th sheet as an initial stage 2 and that on the 11,995th sheet to the 1,200th sheet as after running, and their average values were found. In this test, sheets of A4-size plain paper of 75 g/m$^2$ in basis weight were used, and an original chart with an image area percentage of 2% was continuously reproduced. The results are shown in Table 8.

Image density:

The image density was measured with MACBETH REFLECTION DENSITOMETER RD918 (manufactured by Macbeth Co.), and relative density with respect to an image printed on a white background area with an image density

of 0.00 of an original was measured to make evaluation according to the following criteria.
Rank A: 1.40 or more.
Rank B: From 1.30 or more to less than 1.40.
Rank C: From 1.20 or more to less than 1.30.
Rank D: Less than 1.20.

Measurement of fog:

The fog was measured with REFLECTOMETER MODEL TC-6DS (manufactured by Tokyo Denshoku Co., Ltd.) and the fog was calculated according to the following expression. It follows that, the smaller the numerical value is, the more the fog is kept from occurring.

$$\text{Fog (\%)} = \text{(reflectance (\%) of reference paper)} - \text{(reflectance (\%) of sample non-image area)}.$$

The evaluation was made according to the following criteria.
Rank A: 0.4% or less.
Rank B: More than 0.4% to 0.8% or less.
Rank C: More than 0.8% to 1.2% or less.
Rank D: More than 1.2% to 1.8% or less.
Rank E: More than 1.8%.

Table 8

| | Toner | Normal-temperature and normal-humidity environment | | | | | | High-temperature and high-humidity environment | | | | | |
|---|---|---|---|---|---|---|---|---|---|---|---|---|---|
| | | Image density | | | Fog (%) | | | Image density | | | Fog (%) | | |
| | | Initial stage 1 | Initial stage 2 | After running | Initial stage 1 | Initial stage 2 | After running | Initial stage 1 | Initial stage 2 | After running | Initial stage 1 | Initial stage 2 | After running |
| Example: | | | | | | | | | | | | | |
| 18 | Toner 1 | 1.48 | 1.50 | 1.49 | 0.3 | 0.2 | 0.2 | 1.47 | 1.49 | 1.48 | 0.6 | 0.2 | 0.3 |
| 19 | Toner 2 | 1.47 | 1.49 | 1.48 | 0.3 | 0.2 | 0.3 | 1.42 | 1.48 | 1.47 | 0.6 | 0.2 | 0.4 |
| 20 | Toner 3 | 1.43 | 1.45 | 1.45 | 0.3 | 0.2 | 0.2 | 1.42 | 1.44 | 1.43 | 0.7 | 0.2 | 0.3 |
| 21 | Toner 4 | 1.37 | 1.42 | 1.42 | 0.6 | 0.3 | 0.4 | 1.34 | 1.37 | 1.45 | 0.9 | 0.5 | 0.4 |
| 22 | Toner 5 | 1.33 | 1.41 | 1.41 | 0.7 | 0.3 | 0.6 | 1.32 | 1.36 | 1.36 | 1.1 | 0.6 | 0.9 |
| 23 | Toner 6 | 1.46 | 1.49 | 1.50 | 0.4 | 0.3 | 0.2 | 1.44 | 1.48 | 1.47 | 0.7 | 0.4 | 0.4 |
| 24 | Toner 7 | 1.43 | 1.44 | 1.41 | 0.3 | 0.3 | 0.8 | 1.41 | 1.42 | 1.35 | 0.8 | 0.4 | 1.1 |
| 25 | Toner 8 | 1.41 | 1.45 | 1.42 | 0.4 | 0.2 | 0.8 | 1.33 | 1.41 | 1.37 | 0.6 | 0.4 | 1.0 |
| 26 | Toner 9 | 1.37 | 1.42 | 1.41 | 0.6 | 0.3 | 0.9 | 1.32 | 1.41 | 1.37 | 0.8 | 0.4 | 1.0 |
| 27 | Toner 10 | 1.32 | 1.37 | 1.40 | 0.6 | 0.4 | 0.8 | 1.31 | 1.35 | 1.33 | 0.7 | 0.6 | 1.2 |
| 28 | Toner 11 | 1.49 | 1.51 | 1.49 | 0.2 | 0.1 | 0.2 | 1.47 | 1.49 | 1.48 | 0.2 | 0.2 | 0.2 |
| 29 | Toner 12 | 1.50 | 1.51 | 1.50 | 0.2 | 0.1 | 0.2 | 1.46 | 1.50 | 1.49 | 0.2 | 0.2 | 0.2 |
| 30 | Toner 13 | 1.50 | 1.50 | 1.49 | 0.2 | 0.2 | 0.2 | 1.48 | 1.50 | 1.48 | 0.3 | 0.2 | 0.3 |
| Comparative Example: | | | | | | | | | | | | | |
| 7 | Toner 14 | 1.22 | 1.34 | 1.30 | 2.2 | 1.0 | 0.8 | 1.15 | 1.26 | 1.23 | 2.3 | 1.5 | 1.6 |
| 8 | Toner 15 | 1.28 | 1.40 | 1.35 | 1.0 | 0.6 | 1.1 | 1.26 | 1.37 | 1.34 | 1.4 | 1.0 | 1.4 |

(continued)

| | | | | | | | | | | | | | |
|---|---|---|---|---|---|---|---|---|---|---|---|---|---|
| Comparative Example: | | | | | | | | | | | | | |
| 9 | Toner 16 | 1.10 | 1.21 | 1.20 | 2.6 | 1.8 | 1.6 | 1.05 | 1.10 | 1.07 | 3.0 | 2.4 | 2.6 |

As the result, in the toners 1 to 13 according to the present invention, good image results were obtained on both the image density and the fog in the normal-temperature and normal-humidity environment and in the high-temperature and high-humidity environment. On the other hand, in the toners of Comparative Examples 7 to 9, image defects came about in both the normal-temperature and normal-humidity environment and the high-temperature and high-humidity environment.

## Claims

1. A resin for toners which comprises a polymer containing a unit A having a structure represented by the following formula (1) and a unit B having a structure represented by the following formula (2):

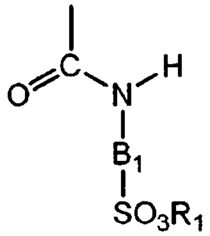

(1)

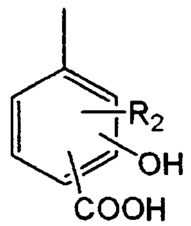

(2)

wherein, in the formula (1);

$R_1$ is a hydrogen atom or an alkyl group having 1 to 12 carbon atom(s); and
$B_1$ is
an alkylene structure having 1 or 2 carbon atom(s) which may have a substituent, or
an aromatic ring which may have a substituent,
wherein the substituent which the alkylene structure may have is one selected from the group consisting of a hydroxyl group, an alkyl group having 1 to 12 carbon atom(s), an aryl group having 1 to 12 carbon atom(s) and an alkoxyl group having 1 to 12 carbon atom(s), and wherein the substituent which the aromatic ring may have is one selected from the group consisting of a hydroxyl group, an alkyl group having 1 to 12 carbon atom(s) and an alkoxyl group having 1 to 12 carbon atom(s); and
in the formula (2);
the COOH and the OH are bonded at positions adjacent to each other; and
$R_2$ is a hydrogen atom or an alkyl group having 1 to 6 carbon atom(s).

2. The resin for toners according to claim 1, wherein the unit A is a unit represented by the following formula (3);

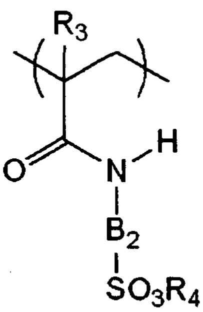

(3)

wherein, in the formula (3);

$R_3$ is a hydrogen atom or a methyl group;
$R_4$ is a hydrogen atom or an alkyl group having 1 to 12 carbon atom(s); and
$B_2$ is
an alkylene structure having 1 or 2 carbon atom(s) which may have a substituent, or
an aromatic ring which may have a substituent,
wherein the substituent which the alkylene structure may have is one selected from the group consisting of a hydroxyl group, an alkyl group having 1 to 12 carbon atom(s), an aryl group having 1 to 12 carbon atom(s) and an alkoxyl group having 1 to 12 carbon atom(s), and wherein the substituent which the aromatic ring may have is one selected from the group consisting of a hydroxyl group, an alkyl group having 1 to 12 carbon atom(s) and an alkoxyl group having 1 to 12 carbon atom(s).

**3.** The resin for toners according to claim 1 or 2, wherein the unit B is a unit represented by the following formula (4);

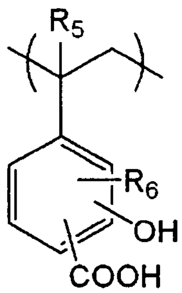

(4)

wherein in the formula (4);

the COOH and the OH are bonded at positions adjacent to each other;
$R_5$ is a hydrogen atom or a methyl group; and
$R_6$ is a hydrogen atom or an alkyl group having 1 to 6 carbon atom(s).

**4.** The resin for toners according to any one of claims 1 to 3, wherein the polymer has a unit derived from a vinyl monomer having none of the structures represented by the formulas (1) and (2).

**5.** The resin for toners according to any one of claims 1 to 4, wherein in the polymer the unit A is in a content of from 0.10% by mass to 30.00% by mass, and the unit B is in a content of from 1.00% by mass to 40.00% by mass.

**6.** A toner which comprises the resin for toners according to any one of claims 1 to 5.

**Patentansprüche**

**1.** Harz für Toner, welches ein Polymer umfasst, das eine Einheit A mit einer durch die folgende Formel (1) dargestellten Struktur und eine Einheit B mit einer durch die folgende Formel (2) dargestellten Struktur enthält:

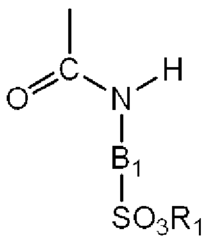

(1)

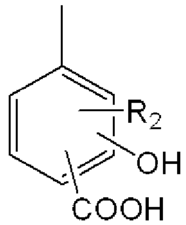

(2)

wobei in der Formel (1);

$R_1$ ein Wasserstoffatom oder eine Alkylgruppe mit 1 bis 12 Kohlenstoffatom(en) ist; und
$B_1$ eine Alkylenstruktur mit 1 oder 2 Kohlenstoffatom(en), welche einen Substituenten aufweisen kann, oder ein aromatischer Ring, welcher einen Substituenten aufweisen kann, ist, wobei der Substituent, welcher die Alkylenstruktur aufweisen kann, einer ist, der aus der Gruppe ausgewählt ist, die aus einer Hydroxylgruppe, einer Alkylgruppe mit 1 bis 12 Kohlenstoffatom(en), einer Arylgruppe mit 1 bis 12 Kohlenstoffatom(en) und einer Alkoxylgruppe mit 1 bis 12 Kohlenstoffatom(en) besteht, und wobei der Substituent, welcher der aromatische Ring aufweisen kann, einer ist, der aus der Gruppe ausgewählt ist, die aus einer Hydroxylgruppe, einer Alkylgruppe mit 1 bis 12 Kohlenstoffatom(en) und einer Alkoxylgruppe mit 1 bis 12 Kohlenstoffatom(en) besteht; und
in der Formel (2);
das COOH und das OH an aneinander angrenzende Positionen gebunden sind; und
$R_2$ ein Wasserstoffatom oder eine Alkylgruppe mit 1 bis 6 Kohlenstoffatom(en) ist.

**2.** Harz für Toner nach Anspruch 1, wobei die Einheit A eine durch die folgende Formel (3) dargestellte Einheit ist;

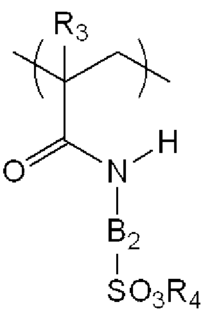

(3)

wobei in der Formel (3);

$R_3$ ein Wasserstoffatom oder eine Methylgruppe ist;
$R_4$ ein Wasserstoffatom oder eine Alkylgruppe mit 1 bis 12 Kohlenstoffantom(en) ist; und
$B_1$ eine Alkylenstruktur mit 1 oder 2 Kohlenstoffatom(en), welche einen Substituenten aufweisen kann, oder ein aromatischer Ring, welcher einen Substituenten aufweisen kann, ist, wobei der Substituent, welcher die Alkylenstruktur aufweisen kann, einer ist, der aus der Gruppe ausgewählt ist, die aus einer Hydroxylgruppe, einer Alkylgruppe mit 1 bis 12 Kohlenstoffatom(en), eine Arylgruppe mit 1 bis 12 Kohlenstoffatom(en) und einer Alkoxylgruppe mit 1 bis 12 Kohlenstoffatom(en) besteht, und wobei der Substituent, welcher der aromatische Ring aufweisen kann, einer ist, der aus der Gruppe ausgewählt ist, die aus einer Hydroxylgruppe, einer Alkylgruppe mit 1 bis 12 Kohlenstoffatom(en) und einer Alkoxylgruppe mit 1 bis 12 Kohlenstoffatom(en) besteht.

**3.** Harz für Toner nach Anspruch 1 oder 2, wobei die Einheit B eine durch die folgende Formel (4) dargestellte Einheit ist;

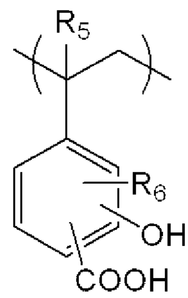

(4)

wobei in der Formel (4);

das COOH und das OH an aneinander angrenzende Positionen gebunden sind;
$R_5$ ein Wasserstoffatom oder eine Methylgruppe ist; und
$R_6$ ein Wasserstoffatom oder eine Alkylgruppe mit 1 bis 6 Kohlenstoffatom(en) ist.

4. Harz für Toner nach einem der Ansprüche 1 bis 3, wobei das Polymer eine Einheit aufweist, die aus einem Vinylmonomer, das keine der durch die Formeln (1) und (2) dargestellten Strukturen aufweist, abgeleitet ist.

5. Harz für Toner nach einem der Ansprüche 1 bis 4, wobei in dem Polymer die Einheit A in einem Gehalt von 0,10 Masse-% bis 30,00 Masse-% ist, und die Einheit B in einem Gehalt von 1,00 Masse-% bis 40,00 Masse-% ist.

6. Toner, welcher das Harz für Toner nach einem der Ansprüche 1 bis 5 umfasst.

**Revendications**

1. Résine pour toners qui comprend un polymère contenant une unité A ayant une structure représentée par la formule suivante (1) et une unité B ayant une structure représentée par la formule suivante (2) :

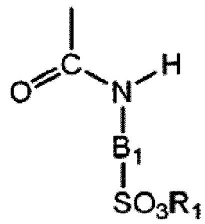

(1)

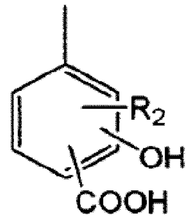

(2)

où, dans la formule (1) :

$R_1$ est un atome d'hydrogène ou un groupe alkyle ayant 1 à 12 atomes de carbone ; et
$B_1$ est
une structure alkylène ayant 1 ou 2 atomes de carbone qui peut avoir un substituant, ou
un cycle aromatique qui peut avoir un substituant, le substituant que la structure alkylène peut avoir étant l'un choisi dans le groupe constitué par un groupe hydroxyle, un groupe alkyle ayant 1 à 12 atomes de carbone, un groupe aryle ayant 1 à 12 atomes de carbone et un groupe alkoxyle ayant 1 à 12 atomes de carbone, et le substituant que le cycle aromatique peut avoir étant l'un choisi dans le groupe constitué par un groupe hydroxyle,

un groupe alkyle ayant 1 à 12 atomes de carbone et un groupe alkoxyle ayant 1 à 12 atomes de carbone ; et

dans la formule (2) :

COOH et OH sont liés en des positions adjacentes l'une de l'autre ; et
$R_2$ est un atome d'hydrogène ou un groupe alkyle ayant 1 à 6 atomes de carbone.

**2.** Résine pour toners selon la revendication 1, dans laquelle l'unité A est une unité représentée par la formule suivante (3) :

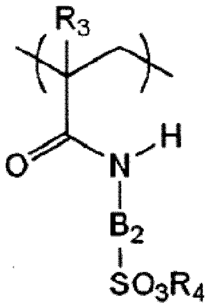
(3)

où, dans la formule (3) :

$R_3$ est un atome d'hydrogène ou un groupe méthyle ;
$R_4$ est un atome d'hydrogène ou un groupe alkyle ayant 1 à 12 atomes de carbone ; et
$B_2$ est
une structure alkylène ayant 1 ou 2 atomes de carbone qui peut avoir un substituant, ou
un cycle aromatique qui peut avoir un substituant, le substituant que la structure alkylène peut avoir étant l'un choisi dans le groupe constitué par un groupe hydroxyle, un groupe alkyle ayant 1 à 12 atomes de carbone, un groupe aryle ayant 1 à 12 atomes de carbone et un groupe alkoxyle ayant 1 à 12 atomes de carbone, et le substituant que le cycle aromatique peut avoir est l'un choisi dans le groupe constitué par un groupe hydroxyle, un groupe alkyle ayant 1 à 12 atomes de carbone et un groupe alkoxyle ayant 1 à 12 atomes de carbone.

**3.** Résine pour toners selon la revendication 1 ou 2, dans laquelle l'unité B est une unité représentée par la formule suivante (4) :

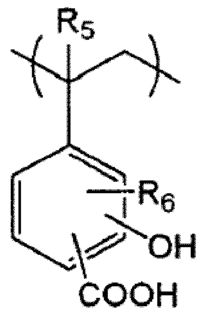
(4)

où, dans la formule (4) :

COOH et OH sont liés en des positions adjacentes l'une de l'autre ;
$R_5$ est un atome d'hydrogène ou un groupe méthyle ; et
$R_6$ est un atome d'hydrogène ou un groupe alkyle ayant 1 à 6 atomes de carbone.

**4.** Résine pour toners selon l'une quelconque des revendications 1 à 3, dans laquelle le polymère a une unité dérivée d'un monomère vinylique n'ayant aucune des structures représentées par les formules (1) et (2).

5. Résine pour toners selon l'une quelconque des revendications 1 à 4, dans laquelle, dans le polymère, l'unité A est présente à une teneur de 0,10 % en masse à 30,00 % en masse, et l'unité B est présente à une teneur de 1,00 % en masse à 40,00 % en masse.

6. Toner qui comprend la résine pour toners selon l'une quelconque des revendications 1 à 5.

FIG. 1

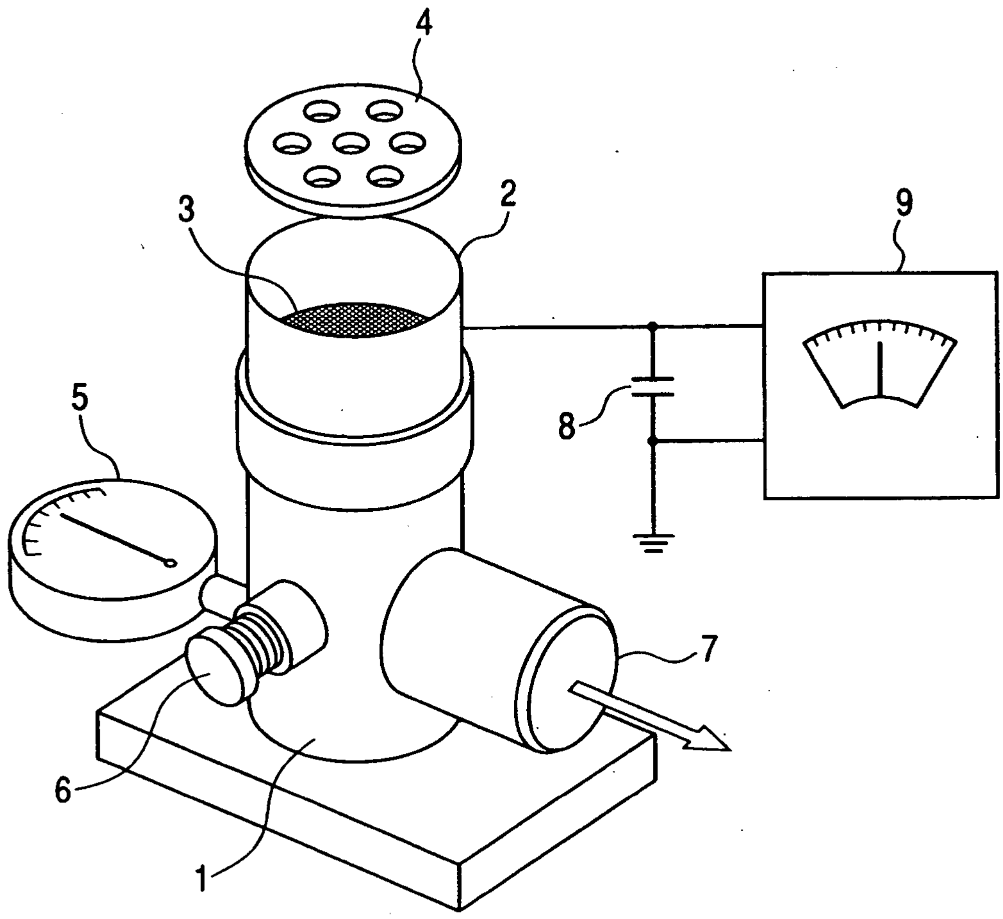

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2694572 B
- JP S3610231 B
- JP S5953856 B
- JP S5961842 B
- JP S62106473 B
- JP S63186253 B
- JP S63270060 B
- JP S62187429 B


### Non-patent literature cited in the description


- Journal of Polymer Science, Polymer Chemistry. 1980, 2755
- *Bioorganic & Medicinal Chemistry,* 2007, vol. 15 (15), 5207